# EUROPEAN PATENT APPLICATION

(11) **EP 4 760 501 A1**
(43) Date of publication of application: **17.06.2026**
(21) Application number: 25797550.8
(22) Date of filing: 24.04.2025
(51) Int. Cl.: G06F 9/451

(54) **DISPLAY METHOD, USER INTERFACE, AND RELATED APPARATUS**

(30) Priority: 30.04.2024 CN 202410564759
(71) Applicant: HUAWEI TECHNOLOGIES CO., LTD., Shenzhen 518129 (CN)
(72) Inventor: LI, Yuandong, Shenzhen, Guangdong 518129 (CN); DUAN, Xipu, Shenzhen, Guangdong 518129 (CN)
(74) Representative: Pfenning, Meinig & Partner mbB
(86) International application number: PCT/CN2025/091070
(87) International publication number: WO 2025/228244

(57) **Abstract**

This application discloses a display method, a user interface, and a related apparatus. The display method is applied to an electronic device including an outer screen and an inner screen. In the method, first content may be displayed on the outer screen after entrance into a first service scenario, and then the first content is switched to second content after a first event in the first service scenario is obtained. It can be learned that, according to the method, when entering a specified service scenario, the electronic device can display content on the outer screen, thereby adding interest to a display effect of the outer screen in the specified service scenario. In addition, based on an event triggered in a service scenario in which the electronic device is located, the electronic device can dynamically adjust the content displayed on the outer screen, to enrich the content displayed on the outer screen, expand application scenarios of the outer screen, and improve a utilization rate of the outer screen.

## Description

This application claims priority to Chinese Patent Application No. 202410564759.6, filed with the China National Intellectual Property Administration on April 30, 2024 and entitled "DISPLAY METHOD, USER INTERFACE, AND RELATED APPARATUS", which is incorporated herein by reference in its entirety.

### TECHNICAL FIELD

This application relates to the field of computer technologies, and in particular, to a display method, a user interface, and a related apparatus.

### BACKGROUND

With continuous update of electronic devices, display screens such as double-sided screens and foldable screens are gradually used in the electronic devices. When an electronic device includes a plurality of display screens, the electronic device may include an outer screen and an inner screen. The inner screen, also referred to as a main screen, is usually located on the front of the electronic device, and may be used to display, to a user, main display content provided by the electronic device, to meet a daily requirement of the user. The outer screen is usually located on the back of the electronic device, and may be used to display auxiliary display content to the user.

However, currently, the outer screen usually can display only information such as time, date, and weather, and display content is monotonous.

### SUMMARY

This application provides a display method, a user interface, and a related apparatus, to enrich display content of an outer screen, and add interest to outer screen displaying.

According to a first aspect, an embodiment of this application provides a display method. The method is applied to an electronic device including an outer screen and an inner screen, and the method includes: The electronic device starts a first application or enables a first function of a second application. The electronic device displays first content on the outer screen in response to the first application being started or the first function being enabled. The electronic device detects a first event during running of the first application or the first function. The electronic device switches the first content to second content.

According to the method provided in the first aspect, when entering a specified service scenario, the electronic device can display specific content on the outer screen, thereby adding interest to a display effect of the outer screen in the specified service scenario. In addition, based on an event triggered in a service scenario in which the electronic device is located, the electronic device can dynamically adjust the content displayed on the outer screen, to enrich the content displayed on the outer screen, expand application scenarios of the outer screen, and improve a utilization rate of the outer screen.

With reference to the first aspect, in a possible implementation, the first application is a phone application or a chat application, or the first function is a voice call function or a video call function, and the first event is a voice keyword uttered by a user who uses the electronic device and/or a call contact during a call; the first application is a games application, or the first function is a game function, and the first event includes one or more of the following: a game progress, a game status, and a player status; or the first application is a camera application, or the first function is an image shooting function, and the first event includes one or more of the following: an image shooting operation, a video recording operation, and an operation of adjusting an image shooting parameter.

With reference to the first aspect, in a possible implementation, the first event is an adjustment operation performed on a display interface of the first application or the first function, and the second content indicates an adjustment status that is of the display interface of the first application or the first function and that is obtained through the adjustment operation.

In other words, the content displayed on the outer screen is viewed, so that a status of adjusting an application interface or a function by the user in a first service scenario can be learned, and the content displayed on the outer screen can convey more information in the first service scenario.

With reference to the first aspect, in a possible implementation, the method further includes: The electronic device starts a third application or enables a second function of a fourth application. The electronic device displays third content on the outer screen in response to the first application being started or the first function being enabled.

In other words, in different service scenarios, animation effects displayed by the electronic device on the outer screen are different. In this way, the user can view the animation effects displayed on the outer screen, to learn of a service scenario in which the electronic device is currently located.

With reference to the first aspect, in a possible implementation, after the electronic device switches the first content to the second content, the method further includes: The electronic device detects a second event during running of the first application or the first function, where the second event and the first event are different. The electronic device switches the second content to fourth content, where the fourth content and the second content are different.

In other words, in different events, animation effects displayed by the electronic device on the outer screen are different. In this way, the user can view the animation effects displayed on the outer screen, to learn of an event in a service scenario in which the electronic device is currently located.

With reference to the first aspect, in a possible implementation, the first content is content preset in the electronic device, the first content is determined based on the first application or the first function, or the first content is content determined based on a user operation.

With reference to the first aspect, in a possible implementation, after the electronic device starts the first application or enables the first function of the second application, and before the electronic device displays the first content on the outer screen, the inner screen is in a screen-off state.

In other words, when identifying that the inner screen is in the screen-off state, the electronic device can control the outer screen to display specified content, thereby enhancing coordination between the inner screen and the outer screen.

With reference to the first aspect, in a possible implementation, the method further includes: The electronic device detects that the inner screen is in a screen-on state. The electronic device controls the outer screen to turn off.

In other words, when the inner screen is in the screen-on state, the electronic device may control the outer screen to turn off, to prevent the outer screen from remaining in a screen-on state in the specified service scenario, and reduce power consumption of the electronic device. In addition, based on whether the inner screen is turned on or off, the electronic device may control the outer screen to turn on or off, enabling a linked operation between the inner screen and the outer screen.

With reference to the first aspect, in a possible implementation, the first function is the voice call function, and the electronic device is in a voice call state when the first content or the second content is displayed on the outer screen.

In the voice call state, the user does not need to view a picture of the inner screen. Therefore, the electronic device may control, in a voice call scenario, the outer screen and the inner screen to present opposite display states.

With reference to the first aspect, in a possible implementation, after the electronic device starts the first application or enables the first function of the second application, and before the electronic device displays the first content on the outer screen, the inner screen is in a screen-on state.

In other words, when identifying that the inner screen is in the screen-on state, the electronic device can control the outer screen to display specified content, thereby enhancing coordination between the inner screen and the outer screen.

With reference to the first aspect, in a possible implementation, the method further includes: The electronic device detects that the inner screen is in a screen-off state. The electronic device controls the outer screen to turn off.

In other words, when the inner screen is in the screen-off state, the electronic device may control the outer screen to turn off, to prevent the outer screen from remaining in a screen-on state in the specified service scenario, and reduce power consumption of the electronic device. In addition, based on whether the inner screen is turned on or off, the electronic device may control the outer screen to turn on or off, enabling a linked operation between the inner screen and the outer screen.

With reference to the first aspect, in a possible implementation, the first function is a function other than the voice call function.

Apart from the voice call function, the user usually needs to view a picture of the inner screen. Therefore, the electronic device 100 may control, in a service scenario except the voice call scenario, the outer screen and the inner screen to present a same display state.

With reference to the first aspect, in a possible implementation, the first content or the second content includes any one or more of the following: a picture, a text, or an animation effect.

With reference to the first aspect, in a possible implementation, the second content includes an animation effect; and after the electronic device switches the first content to the second content, the method further includes: When detecting a first preset condition, the electronic device reduces display brightness of the second content, and/or increases a playing interval of the animation effect included in the second content, where the first preset condition includes one or more of the following: Duration in which the first application or the first function is run reaches first duration, a battery level of the electronic device is less than a first threshold, and the electronic device enables a power saving mode.

This can reduce power consumption of the electronic device, and prolong service life of the electronic device.

With reference to the first aspect, in a possible implementation, a size of the outer screen is less than a size of the inner screen.

With reference to the first aspect, in a possible implementation, the inner screen includes a first display screen and a second display screen; when the electronic device is in a folded state, the first display screen and the second display screen are in face-to-face contact; and when the electronic device is in an unfolded state, the outer screen is located on the back of the inner screen.

According to a second aspect, an embodiment of this application provides an electronic device, including an outer screen, an inner screen, a memory, one or more processors, and one or more programs. When the one or more processors execute the one or more programs, the electronic device is caused to implement the method according to the first aspect or any one of the possible implementations of the first aspect.

According to a third aspect, an embodiment of this application provides a computer-readable storage medium including instructions. When the instructions are run on an electronic device, the electronic device is caused to perform the method according to the first aspect or any one of the possible implementations of the first aspect.

According to a fourth aspect, an embodiment of this application provides a computer program product. When the computer program product runs on a computer, the computer is caused to perform the method according to the first aspect or any one of the possible implementations of the first aspect.

### BRIEF DESCRIPTION OF DRAWINGS

FIG. 1 is a diagram of an appearance of an electronic device 100 according to an embodiment of this application;
FIG. 2 is a diagram of relative locations between a user and an electronic device 100 in a case in which the electronic device 100 is in different service scenarios according to an embodiment of this application;
FIG. 3A and FIG. 3B show related user interfaces of an electronic device 100 displaying, on an outer screen, an animation effect selected by a user according to an embodiment of this application;
FIG. 4A to FIG. 4C show related user interfaces of an electronic device 100 displaying a profile picture of a call contact on an outer screen in a voice call scenario according to an embodiment of this application;
FIG. 5A to FIG. 5C show related user interfaces of an electronic device 100 displaying a profile picture of a call contact on an outer screen in a video call scenario according to an embodiment of this application;
FIG. 6 shows a related user interface 50 of an electronic device 100 setting animation effects corresponding to different voice keywords according to an embodiment of this application;
FIG. 7A to FIG. 7C show three animation effects displayed by an electronic device 100 on an outer screen based on voice keywords according to an embodiment of this application;
FIG. 8A to FIG. 8D show related user interfaces displayed by an electronic device 100 on an inner screen and an outer screen in a game scenario according to an embodiment of this application;
FIG. 9A to FIG. 9D show related user interfaces displayed by an electronic device 100 on an outer screen and an inner screen in an image shooting scenario according to an embodiment of this application;
FIG. 10A to FIG. 10C show animation effects with gradually decreasing display brightness that are sequentially displayed by an electronic device 100 according to an embodiment of this application;
FIG. 11 is an overall schematic flowchart of a display method according to an embodiment of this application;
FIG. 12 is a schematic flowchart of a method for determining display modes of an inner screen and an outer screen by an electronic device 100 according to an embodiment of this application;
FIG. 13 is a schematic flowchart of another display method according to an embodiment of this application;
FIG. 14A and FIG. 14B are a diagram of interaction between internal modules of an electronic device 100 in a voice call scenario according to an embodiment of this application;
FIG. 15 is a diagram of a hardware structure of an electronic device 100 according to an embodiment of this application; and
FIG. 16 is a block diagram of a software structure of an electronic device 100 according to an embodiment of this application.

### DESCRIPTION OF EMBODIMENTS

The technical solutions according to embodiments of this application are clearly and completely described in the following with reference to the accompanying drawings. In descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in descriptions of embodiments of this application, "a plurality of' means two or more than two.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

The term "user interface (user interface, UI)" in the following embodiments of this application is a medium interface for interaction and information exchange between an application or an operating system and a user. The user interface implements conversion between an internal form of information and a form acceptable to the user. The user interface is source code written in a specific computer language like Java or an extensible markup language (extensible markup language, XML). Interface source code is parsed and rendered on an electronic device, and is finally presented as content that can be identified by the user. The user interface is usually represented in a form of a graphical user interface (graphical user interface, GUI), and is a user interface that is related to a computer operation and that is displayed in a graphic manner. The user interface may be a visual interface element like a text, an icon, a button, a menu, a tab, a text box, a dialog box, a status bar, a navigation bar, or a widget that is displayed on a display screen of an electronic device.

An embodiment of this application provides a display method. The display method is applied to an electronic device including an outer screen and an inner screen. In the method, first content may be displayed on the outer screen after entrance into a first service scenario, and then the first content is switched to second content after a first event in the first service scenario is obtained.

For example, the first content may include one or more of the following: a text, a picture, or an animation effect.

It can be learned that, according to the method, when entering a specified service scenario, the electronic device can display specific content on the outer screen, thereby adding interest to a display effect of the outer screen in the specified service scenario. In addition, based on an event triggered in a service scenario in which the electronic device is located, the electronic device can dynamically adjust the content displayed on the outer screen, to enrich the content displayed on the outer screen, expand application scenarios of the outer screen, and improve a utilization rate of the outer screen.

**A structure of the electronic device in this embodiment of this application is first described.**

The display method provided in embodiments of this application may be applied to an electronic device 100 including a plurality of display screens.

The electronic device 100 may include at least an outer screen and an inner screen.

The inner screen may be used to display main display content provided by the electronic device 100, and the outer screen may be used to display auxiliary display content provided by the electronic device 100.

For example, when a user uses the electronic device 100, the inner screen usually faces the user and the outer screen usually faces away from the user.

Further, optionally, the electronic device 100 may be a foldable screen device. The foldable screen may have different forms at different folding angles, for example, an unfolded state and a folded screen. In different forms, the foldable screen may display a picture by using different display screens.

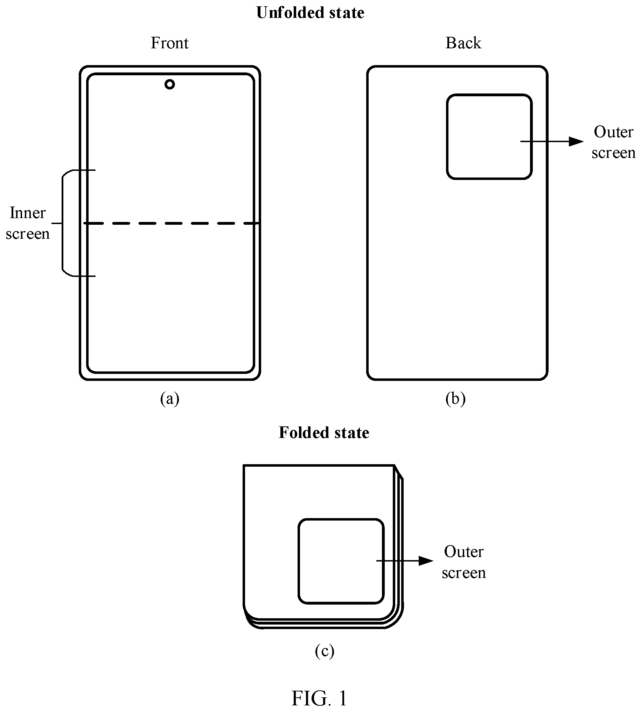

FIG. 1 is a diagram of an example of an appearance of the electronic device 100.

(a) in FIG. 1 is a front view of the electronic device 100. It can be learned that the inner screen of the electronic device 100 is located on the front of the electronic device 100.

(b) in FIG. 1 is a rear view of the electronic device 100. It can be learned that the outer screen of the electronic device 100 is located on the back of the electronic device 100.

In addition, if the electronic device 100 is a foldable screen device, (a) and (b) in FIG. 1 are diagrams of an appearance of the electronic device 100 in the unfolded state, and (c) in FIG. 1 is a diagram of an appearance of the electronic device 100 in the folded state.

Generally, when the electronic device 100 is in the unfolded state, the outer screen may be on the opposite side of the inner screen, the inner screen faces the user, and the outer screen faces away from the user. When the electronic device 100 is in the folded state, the inner screen may be divided into two display screens, the two display screens may be in face-to-face contact, and the outer screen faces the user.

For example, a size of the outer screen may be less than a size of the inner screen.

It may be understood that the electronic device 100 shown in FIG. 1 is merely an example. In another embodiment of this application, the outer screen and the inner screen may be located on a same surface, the outer screen may be in a circular shape, and the electronic device 100 may alternatively not be a foldable screen device. An appearance of the electronic device 100 is not limited in embodiments of this application.

The following describes service scenarios that may be included in this application.

### (1) Voice call scenario

If the electronic device 100 initiates a voice call to another device, or the electronic device 100 receives a voice call initiated by another device, the electronic device 100 may enter the voice call scenario. Further, if the voice call ends or is hung up, the electronic device 100 may exit the voice call scenario.

For example, the electronic device 100 may use a phone application or another third-party application that includes a voice call function to initiate the voice call to the another device or receive the voice call initiated by the another device.

For example, when the electronic device 100 initiates the voice call to the another device, the electronic device 100 may display a call waiting interface of the voice call on the inner screen. After the call is connected, the electronic device 100 may display, on the inner screen, a user interface of the connected voice call. Similarly, when the electronic device 100 receives the voice call initiated by the another device, the electronic device 100 may display prompt information of an incoming voice call on the inner screen. After the call is connected, the electronic device 100 may display, on the inner screen, a user interface of the connected voice call. Further, during the voice call, if the electronic device 100 is close to the user, for example, close to an ear of the user, the inner screen of the electronic device 100 may be turned off; or if the electronic device 100 is far away from the user, the inner screen of the electronic device 100 may be turned on. After the voice call ends, the electronic device 100 may display a user interface of the ended voice call.

In this embodiment of this application, after entering the voice call scenario, the electronic device 100 may display specific content on the outer screen. Then, in the voice call scenario, the electronic device 100 may further change, based on an event in the voice call scenario, for example, a voice keyword that is of the user or a call contact and that is recognized by the electronic device 100, the content displayed on the outer screen.

In this way, when the electronic device 100 is in the voice call scenario, the outer screen can provide a corresponding display picture, thereby adding interest to outer screen displaying.

### (2) Video call scenario

If the electronic device 100 initiates a video call to another device, or the electronic device 100 receives a video call initiated by another device, the electronic device 100 may enter the video call scenario. Further, if the video call ends or is hung up, the electronic device 100 may exit the video call scenario.

For example, the electronic device 100 may use an application that includes a video call function to initiate the video call to the another device or receive the video call initiated by the another device.

For example, when the electronic device 100 initiates the video call to the another device, the electronic device 100 may display a call waiting interface of the video call on the inner screen. After the call is connected, the electronic device 100 may display, on the inner screen, a picture captured by a camera of a peer party. Similarly, when the electronic device 100 receives the voice call initiated by the another device, the electronic device 100 may display prompt information of the incoming video call on the inner screen. After the call is connected, the electronic device 100 may display, on the inner screen, a picture captured by the camera of a peer party.

In this embodiment of this application, after entering the video call scenario, the electronic device 100 may display specific content on the outer screen. Then, in the video call scenario, the electronic device 100 may further change, based on an event in the video call scenario, for example, a voice keyword that is of the user or a call contact and that is recognized by the electronic device 100, a picture captured by a camera of the electronic device 100, or a picture captured by a camera of a call contact, the content displayed on the outer screen.

In this way, when the electronic device 100 is in the video call scenario, the outer screen can provide a corresponding display picture, thereby adding interest to outer screen displaying.

### (3) Game scenario

For example, if the electronic device 100 starts a games application or enables a game function, the electronic device 100 may enter the game scenario. Further, if the electronic device 100 exits the games application or disables the game function, the electronic device 100 may exit the game scenario.

For example, when the electronic device 100 runs the games application, the electronic device 100 may display a page of the games application on the inner screen. When the electronic device 100 uses the game function, the electronic device 100 may display a page related to the game function on the inner screen.

In this embodiment of this application, after entering the game scenario, the electronic device 100 may display specific content on the outer screen. Then, in the game scenario, the electronic device 100 may further change, based on an event in the game scenario, for example, a game status, the content displayed on the outer screen.

In this way, when the electronic device 100 is in the game scenario, the outer screen can provide a corresponding display picture, thereby adding interest to outer screen displaying.

### (4) Image shooting scenario

For example, if the electronic device 100 runs a camera application or uses an image shooting function in the application, the electronic device 100 may enter the image shooting scenario. Further, if the electronic device 100 exits the camera application or disables the image shooting function in the application, the electronic device 100 may exit the image shooting scenario.

For example, when the electronic device 100 runs the camera application or uses the image shooting function in the application, the electronic device 100 may display an image shooting interface on the inner screen, and the image shooting interface may include a picture captured by a camera in real time.

In this embodiment of this application, after entering the image shooting scenario, the electronic device 100 may display specific content on the outer screen. Then, in the image shooting scenario, the electronic device 100 may further change, based on an event in the image shooting scenario, for example, an operation of adjusting an aperture size, adjusting a focal length, switching a camera, shooting an image, or recording a video, the content displayed on the outer screen.

In this way, when the electronic device 100 is in the image shooting scenario, the outer screen can provide a corresponding display picture, thereby adding interest to outer screen displaying.

It may be understood that embodiments of this application may further relate to another service scenario, for example, a text chat scenario. This is merely an example herein. The service scenario is not limited in embodiments of this application.

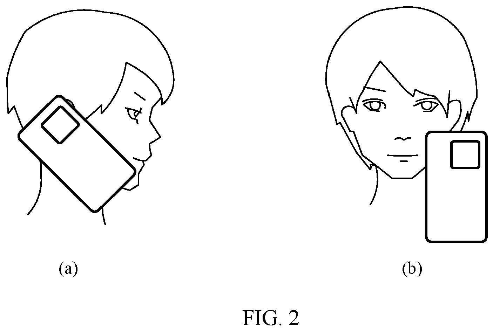

In addition, for example, FIG. 2 is a diagram of relative locations between the user and the electronic device 100 in a case in which the electronic device 100 is in different service scenarios.

(a) in FIG. 2 corresponds to the voice call scenario mentioned above. It can be learned from (a) in FIG. 2 that, in the voice call scenario, the user usually does not view the inner screen of the electronic device 100, and when the user approaches the electronic device 100, the inner screen is in a screen-off state. However, the electronic device 100 may still be in the voice call scenario.

Therefore, in this embodiment of this application, in the voice call scenario of the electronic device 100, the electronic device 100 may turn on the outer screen when the inner screen is turned off, and turn off the outer screen when the inner screen is turned on, to implement collaborative displaying between the inner screen and the outer screen in a specified service scenario, and enhance coordination between the inner screen and the outer screen.

For example, for ease of description, in the following embodiments of this application, in a service scenario, a collaborative display mode in which the inner screen is turned on and the outer screen is turned off, and the outer screen is turned on and the inner screen is turned off may be referred to as a mutually exclusive collaboration mode. Alternatively, the mutually exclusive collaboration mode may also be referred to as an alternating display mode. It should be understood that the name does not constitute a limitation on embodiments of this application.

It may be understood that screen-off may also be referred to as display-off, black screen state, or the like. This name is not limited in this embodiment of this application.

In addition, (b) in FIG. 2 corresponds to the video call scenario, the game scenario, or the image shooting scenario mentioned above. It can be learned from (b) in FIG. 2 that, in the video call scenario, the game scenario, or the image shooting scenario, the user usually needs to view a picture displayed on the inner screen of the electronic device 100. For example, the user views a video picture of a call contact in the video call scenario, views a game picture in the game scenario, and views an image captured by a camera in real time in the image shooting scenario. However, if the inner screen is in the screen-off state, the user usually cannot perform a related operation in the service scenario.

Therefore, in this embodiment of this application, in the video call scenario, the game scenario, or the image shooting scenario of the electronic device 100, the electronic device 100 may turn on the outer screen when the inner screen is turned on, and turn off the outer screen when the inner screen is turned off, to implement collaborative displaying between the inner screen and the outer screen in the specified service scenario.

For example, for ease of description, in the following embodiments of this application, in a service scenario, a collaborative display mode in which the inner screen is turned on and the outer screen is turned on, and the inner screen is turned off and the outer screen is turned off may be referred to as a synchronized collaboration mode. Alternatively, the synchronized collaboration mode may also be referred to as a co-display mode. It should be understood that the name does not constitute a limitation on embodiments of this application.

It should be noted that both display modes of the inner screen and the outer screen may be in the synchronized collaboration mode whenever an operation of a service scenario requires the user to view a display screen, and both display modes of the inner screen and the outer screen may be in the mutually exclusive display mode whenever an operation of a service scenario does not require the user to view a display screen. It can be learned that the foregoing service scenarios in different collaborative display modes are merely examples, and do not constitute a limitation on embodiments of this application.

The following describes related user interfaces of the electronic device 100 in different service scenarios by using an example in which content displayed on the outer screen in a service scenario is an animation effect.

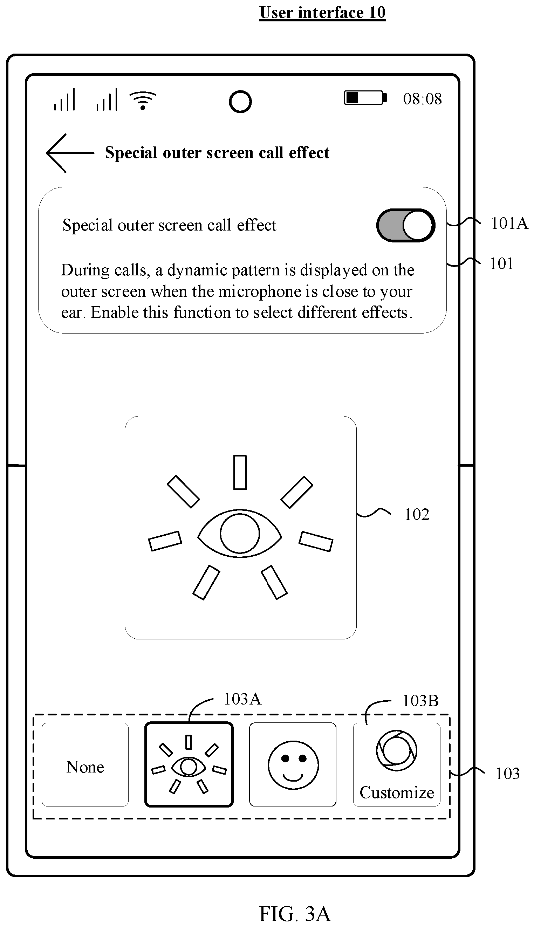

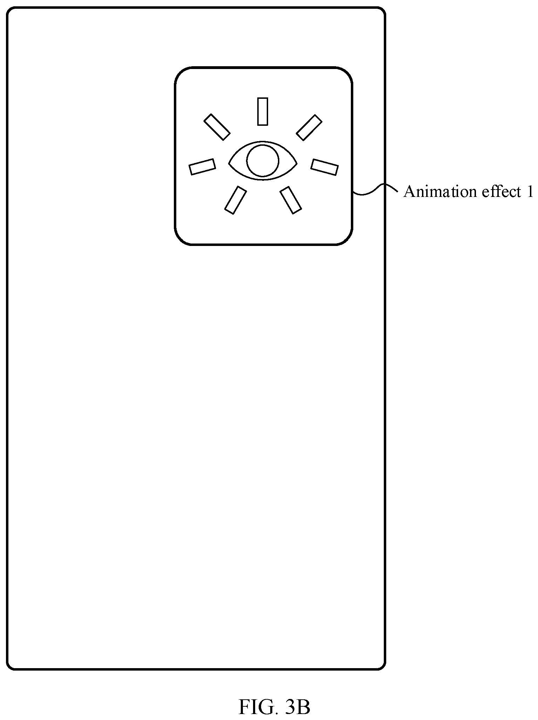

**FIG. 3A** **and** **FIG. 3B** **show related user interfaces of the electronic device 100 displaying, on the outer screen, an animation effect selected by the user according to this embodiment of this application.**

FIG. 3A shows a user interface 10 used by the electronic device 100 to enable a special outer screen call effect. The special outer screen call effect may be used to display an animation effect on the outer screen when the electronic device 100 is in a specified service scenario, for example, a voice call scenario or a video call scenario.

As shown in FIG. 3A, the user interface 10 may include a function option 101, a preview box 102, and an animation effect option bar 103.

The function option 101 may be used to enable or disable the special outer screen call effect. For example, the function option 101 may include a toggle 101A. The electronic device 100 may detect a user operation performed on the toggle 101A, for example, a tap operation, and the electronic device 100 may enable or disable the special outer screen call effect in response to the operation.

The preview box 102 may be used to display an animation effect that corresponds to an animation effect option in a selected state in the animation effect option bar 103.

The animation effect option bar 103 may include one or more animation effect options. In the specified service scenario, the electronic device 100 may display, on the outer screen, an animation effect in an animation effect option selected by the user. For example, with reference to FIG. 3A, if the electronic device 100 selects, based on a user operation, an animation effect option 103A in the animation effect option bar 103, the electronic device 100 may display, in the preview box 102, an animation effect corresponding to the animation effect option 103A. In addition, in the specified service scenario, the electronic device 100 may display the animation effect corresponding to the animation effect option 103A (referred to as an animation effect 1 below) on the outer screen. For a display effect, refer to FIG. 3B.

As shown in FIG. 3B, if the electronic device 100 is in the specified service scenario, for example, the voice call scenario or the video call scenario, the electronic device 100 may display the animation effect 1 on the outer screen.

In some implementations, the animation effect option bar 103 may further include an animation effect option 103B, and the animation effect option 103B may be used to implement a customized animation effect displayed on the outer screen. For example, the electronic device 100 may select, based on a user operation, resources such as a picture or a video in a gallery, or download resources such as a picture or a video from a network, to generate a customized animation effect displayed on the outer screen.

In some implementations, the electronic device 100 may further set corresponding animation effects in different service scenarios based on user operations. In this way, when entering the different service scenarios, the electronic device 100 may display different animation effects on the outer screen.

It may be understood that, if the electronic device 100 is not in the specified service scenario, the outer screen may be in a screen-off state, or display content such as time, date, or weather. In addition to the animation effect displayed by the electronic device 100 on the outer screen in the specified service scenario selected by the user, a corresponding animation effect in the specified service scenario may be preset in the electronic device 100. In this way, when the electronic device 100 enters the specified service scenario, the electronic device 100 may directly display the preset animation effect corresponding to the service scenario on the outer screen.

It can be learned from FIG. 3A and FIG. 3B that, the electronic device 100 may enable or disable the animation effect on the outer screen in the specified service scenario based on a user operation, thereby improving user operability. In addition, the user may set in advance an animation effect displayed on the outer screen in the specified service scenario. In this way, when the electronic device 100 enters the specified service scenario, the electronic device 100 may display, on the outer screen, the animation effect selected by the user, to implement linkage between the outer screen of the electronic device 100 and a service scenario in which the electronic device 100 is located, thereby adding interest to outer screen displaying.

In some implementations, in different service scenarios, an animation effect displayed by the electronic device on the outer screen may be associated with a service scenario.

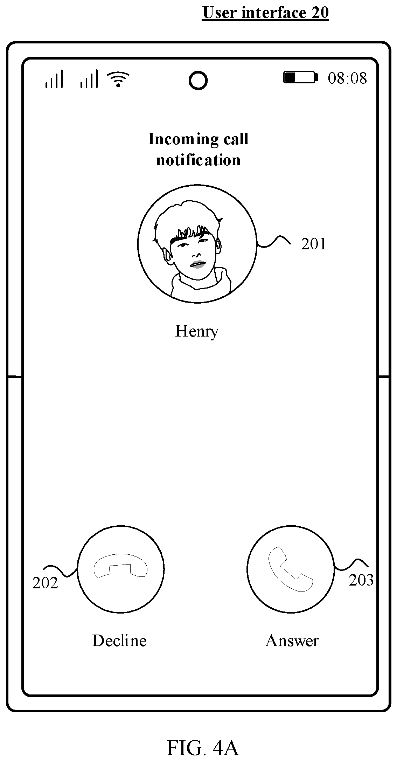

**FIG. 4A to FIG. 4C** **show related user interfaces of the electronic device 100 displaying a profile picture of a call contact on the outer screen in a voice call scenario.**

For example, FIG. 4A shows a user interface 20 displayed on the inner screen when the electronic device 100 receives an incoming voice call.

As shown in FIG. 4A, the user interface 20 may include a user profile picture 201, a Decline option 202, and an Answer option 203.

The user profile picture 201 may be used to display a profile picture of a caller, the Decline option 202 may be used to trigger declining an incoming call, and the Answer option 203 may be used to trigger answering the incoming call.

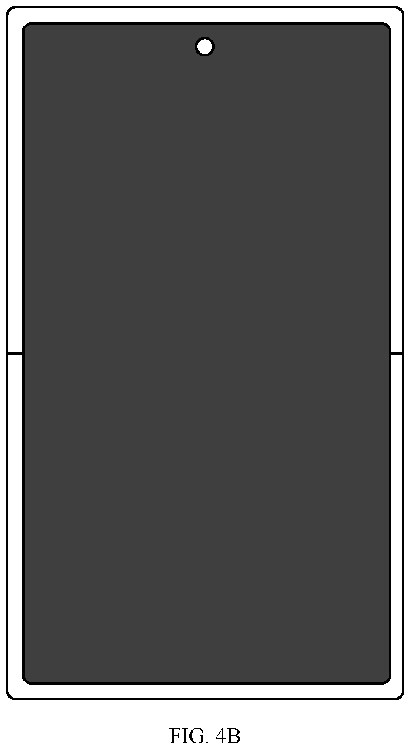

For example, when the electronic device 100 detects a user operation performed on the Answer option 203, for example, a tap operation, the electronic device 100 enters a call status in response to the operation. Then, if the electronic device 100 detects that the user approaches an earpiece, the electronic device 100 may turn off the inner screen. Refer to FIG. 4B.

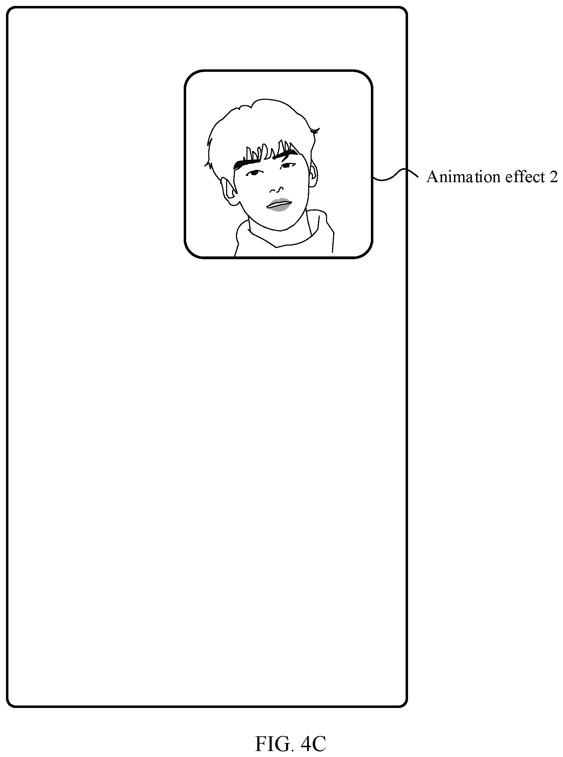

In some implementations, when displaying the user interface 20 shown in FIG. 4A on the inner screen, the electronic device 100 may display an animation effect 2 shown in FIG. 4C on the outer screen. The animation effect 2 may include the profile picture of the caller that is displayed as the user profile picture 201 shown in FIG. 4A.

In some implementations, if display modes of the inner screen and the outer screen are in a mutually exclusive collaboration mode, in the voice call scenario, after the inner screen is turned off (that is, FIG. 4B), the electronic device 100 may display, on the outer screen, the animation effect 2 shown in FIG. 4C. Further, if the inner screen is turned on in the voice call scenario, the outer screen may enter a screen-off state.

It may be understood that, in the voice call scenario, in addition to the profile picture of the call contact, an animation effect displayed on the outer screen may display other content, for example, an application icon of a phone application and a preset animation effect corresponding to the voice call scenario.

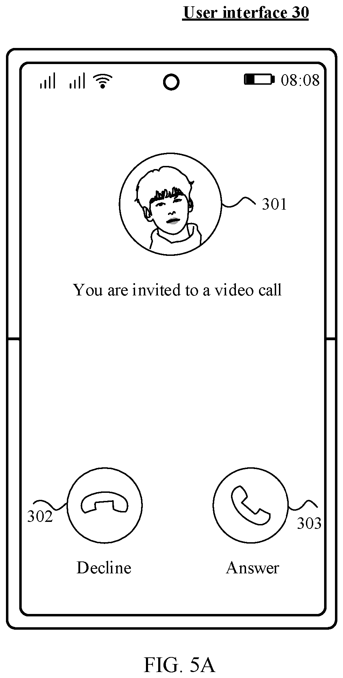

**FIG. 5A to FIG. 5C** **show related user interfaces of the electronic device 100 displaying a profile picture of a call contact on the outer screen in a video call scenario.**

For example, FIG. 5A shows a user interface 30 displayed on the inner screen after the electronic device 100 receives an incoming video call.

As shown in FIG. 5A, the user interface 30 may include a user profile picture 301, a Decline option 302, and an Answer option 303.

The user profile picture 301 may be used to display a profile picture of a caller, the Decline option 302 may be used to trigger declining an incoming call, and the Answer option 303 may be used to trigger answering the incoming call.

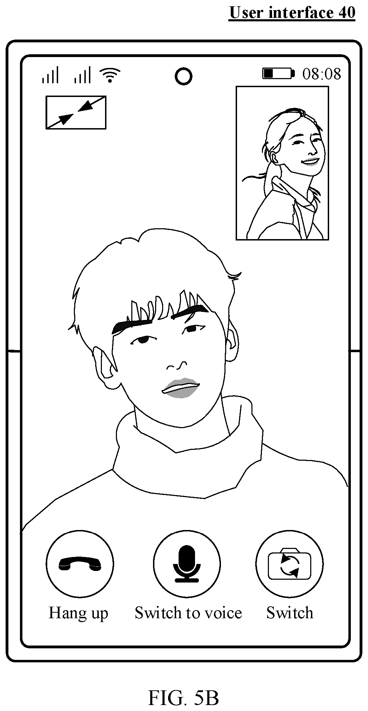

For example, when the electronic device 100 detects a user operation performed on the Answer option 303, for example, a tap operation, in response to the operation, the electronic device 100 may enter a video call state and display a user interface 40 shown in FIG. 5B. The user interface 40 may be used to display an image captured by a camera of the electronic device 100 and an image captured by a camera of the caller.

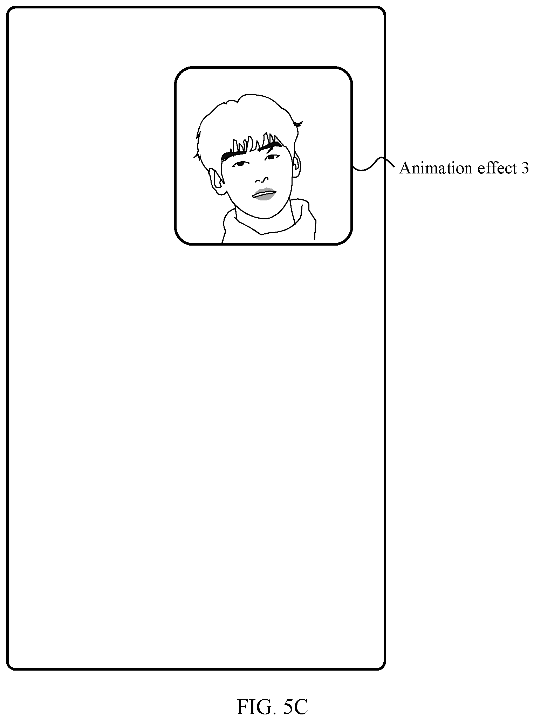

In some implementations, when displaying the user interface 30 shown in FIG. 5A or displaying the user interface 40 shown in FIG. 5B, the electronic device 100 may enter the video call scenario, and the electronic device 100 may display an animation effect 3 shown in FIG. 5C on the outer screen. The animation effect 3 may include the profile picture of the caller that is displayed as the user profile picture 301 shown in FIG. 5A.

Further, optionally, in the video call scenario, the inner screen and the outer screen may be in a synchronized collaboration mode. To be specific, if the inner screen is turned on, the outer screen may be turned on, and a corresponding animation effect in the video call scenario is displayed; or if the inner screen is turned off, the outer screen is turned off.

It may be understood that, in the video call scenario, in addition to the profile picture of the call contact, an animation effect displayed on the outer screen may display other content, for example, an application icon of a phone application and a preset animation effect corresponding to the video call scenario.

Further, in a specified service scenario, in addition to displaying the animation effect on the outer screen, the electronic device 100 may change, based on a corresponding event in the specified service scenario, the animation effect displayed on the outer screen.

For example, in a voice call scenario or the video call scenario, the electronic device 100 may obtain voices of both parties in a call. Therefore, the electronic device 100 may change, based on an obtained voice keyword, an animation effect displayed on the outer screen to an animation effect corresponding to the voice keyword.

Optionally, for different voice keywords, a plurality of animation effects may be preset in the electronic device 100, so that the electronic device 100 may select a specified animation effect from the plurality of animation effects based on a user operation. In this way, when the electronic device 100 is in the voice call scenario or the video call scenario, if a specified voice keyword is detected, the electronic device 100 may display, on the outer screen, an animation effect selected by the user based on the voice keyword.

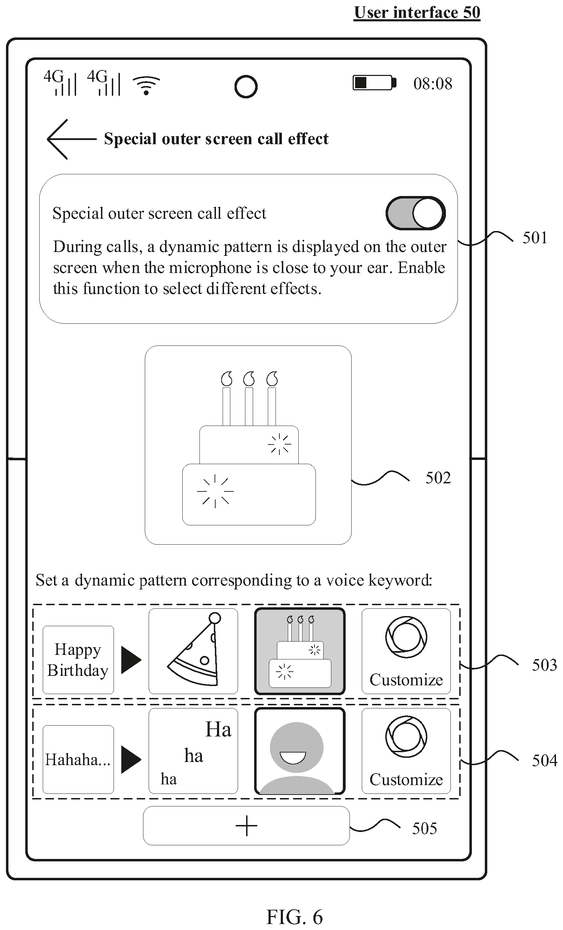

For example, FIG. 6 shows a related user interface 50 of the electronic device 100 setting animation effects corresponding to different voice keywords according to this embodiment of this application.

As shown in FIG. 6, the user interface 50 may include a function option 501, a preview box 502, a first animation effect option bar 503, a second animation effect option bar 504, and a New option 505.

Specifically, the function option 501 may be used to enable or disable a special outer screen call effect. For specific descriptions of the function option 501, refer to the foregoing descriptions of the function option 101. Details are not described herein again.

The preview box 502 may be used to display an animation effect that corresponds to an animation effect option the most recently selected by the user in an option bar like the first animation effect option bar 503 or the second animation effect option bar 504.

The first animation effect option bar 503 may include one or more animation effect options corresponding to a voice keyword "Happy Birthday". In the specified service scenario, if detecting the voice keyword "Happy birthday", the electronic device 100 may change, based on an animation effect in the animation effect options that is selected by the user in the first animation effect option bar 503, an animation effect displayed on the outer screen.

The second animation effect option bar 504 may include one or more animation effect options corresponding to the voice keyword "Hahaha...". In the specified service scenario, if detecting the voice keyword "Hahaha...", the electronic device 100 may change, based on an animation effect in the animation effect options that is selected by the user in the first animation effect option bar 504, an animation effect displayed on the outer screen.

The New option 505 may be used to create a voice keyword and set an animation effect corresponding to the voice keyword.

It may be understood that, for one voice keyword, only one animation effect corresponding to the voice keyword may also be preset in the electronic device 100. In this way, when detecting a voice keyword, the electronic device 100 may directly display, on the outer screen, an animation effect corresponding to the voice keyword, without requiring the user to select one from a plurality of animation effects, thereby reducing trouble of a user operation.

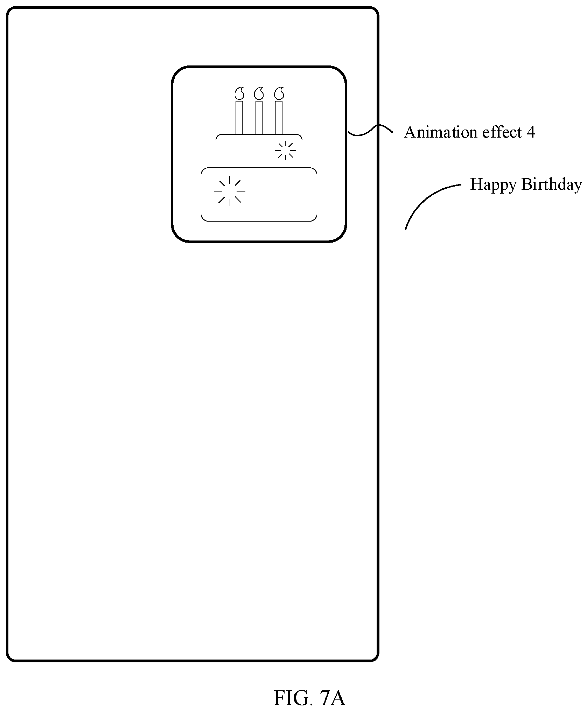

**FIG. 7A to FIG. 7C** **show three animation effects displayed by the electronic device 100 on the outer screen based on voice keywords.**

In an implementation, in a voice call scenario or a video call scenario, if the electronic device 100 detects a specified voice keyword, the electronic device 100 may switch an animation effect displayed on the outer screen to an animation effect corresponding to the voice keyword.

Withe reference to FIG. 7A, in the voice call scenario or the video call scenario, if the electronic device 100 detects that a voice keyword of the user is "Happy Birthday", the electronic device 100 may switch the animation effect 2 shown in FIG. 4C or the animation effect 3 shown in FIG. 5C to an animation effect 4 shown in FIG. 7A.

For example, the animation effect 4 may be an animation effect that corresponds to the voice keyword "Happy Birthday" and that is preset in the electronic device 100, or may be an animation effect selected by the user on the user interface 50 shown in FIG. 6. A source of the animation effect corresponding to the voice keyword is not limited in embodiments of this application.

In another implementation, in a voice call scenario or a video call scenario, if the electronic device 100 detects a specified voice keyword, the electronic device 100 may overlay an animation effect corresponding to the voice keyword onto an animation effect displayed on the outer screen.

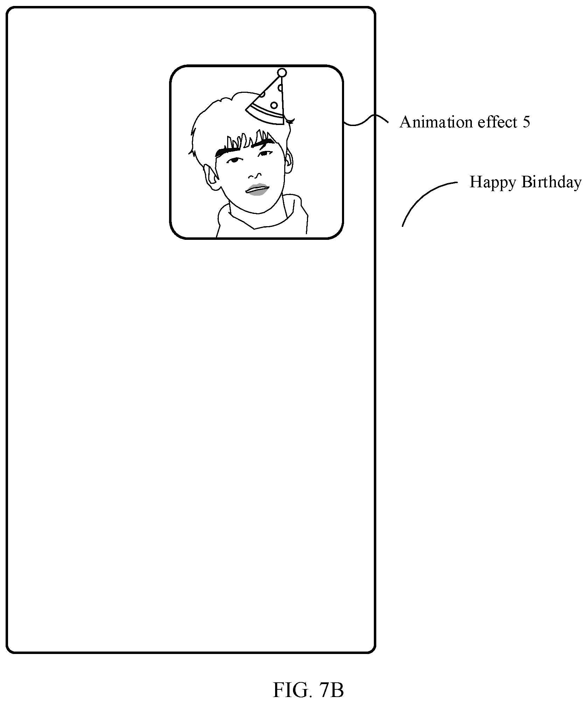

With reference to FIG. 7B, in the voice call scenario or the video call scenario, if the electronic device 100 detects that a voice keyword of the user is "Happy Birthday", the electronic device 100 may overlay an animation effect corresponding to the voice keyword onto the animation effect 2 shown in FIG. 4C or the animation effect 3 shown in FIG. 5C, where an updated animation effect may be an animation effect 5 shown in FIG. 7B.

For example, compared with the animation effect 2 or the animation effect 3, a new animation effect in the animation effect 5 may be an animation effect that corresponds to the voice keyword "Happy birthday" and that is preset in the electronic device 100, or may be an animation effect selected by the user on the user interface 50 shown in FIG. 6. A source of the animation effect corresponding to the voice keyword is not limited in embodiments of this application.

In still another implementation, if an animation effect displayed on the outer screen after the electronic device 100 enters a voice call scenario or a video call scenario includes a profile picture of a call contact, the electronic device 100 may analyze mood or emotion of a peer party based on a voice keyword or a voice tone of the call contact, and change an animation effect of the outer screen based on the mood or emotion, for example, change facial expression of the profile picture displayed on the outer screen.

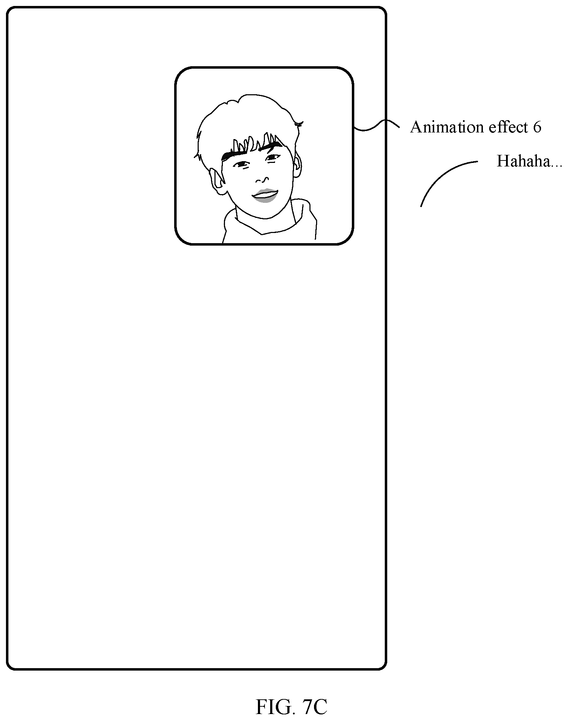

With reference to FIG. 7C, in the voice call scenario or the video call scenario, if the electronic device 100 detects that the voice keyword of the call contact is "Hahaha...", the electronic device 100 may switch the animation effect 2 shown in FIG. 4C or the animation effect 3 shown in FIG. 5C to an animation effect 6 shown in FIG. 7C. Different from the animation effect 2 or the animation effect 3, a face in the animation effect 6 has a smile.

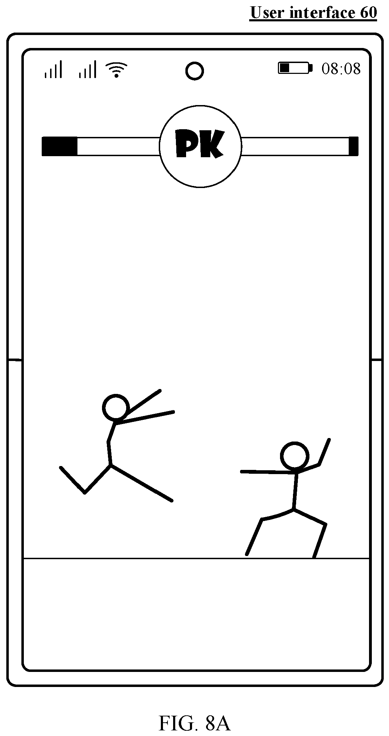

**FIG. 8A to FIG. 8D** **show related user interfaces displayed by the electronic device 100 on the inner screen and the outer screen in a game scenario.**

FIG. 8A shows a user interface 60 displayed on the inner screen when the electronic device 100 runs a games application. The user interface 60 displays an image of the user playing against other players in the games application.

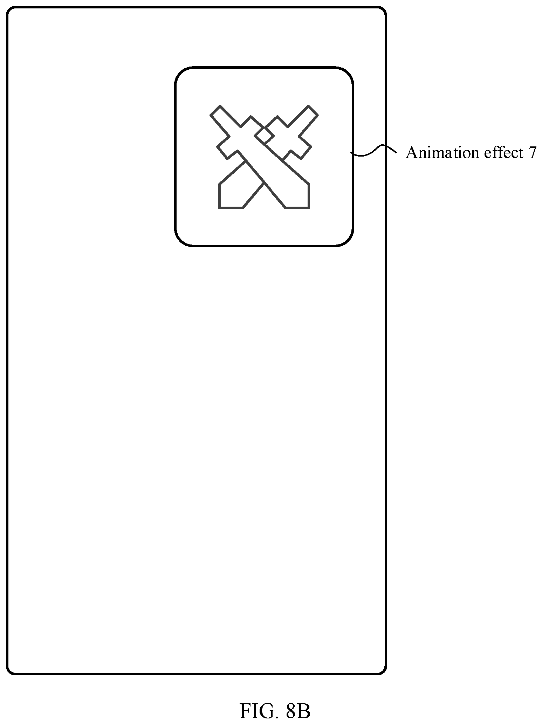

For example, the electronic device 100 may enter the game scenario when the games application is started or after a game is added to the games application, that is, display an animation effect 7 shown in FIG. 8B on the outer screen.

For example, the animation effect 7 may be an animation effect that corresponds to the game scenario and that is preset in the electronic device 100, or may be an animation effect selected by the user. A source of the animation effect 7 is not limited in embodiments of this application.

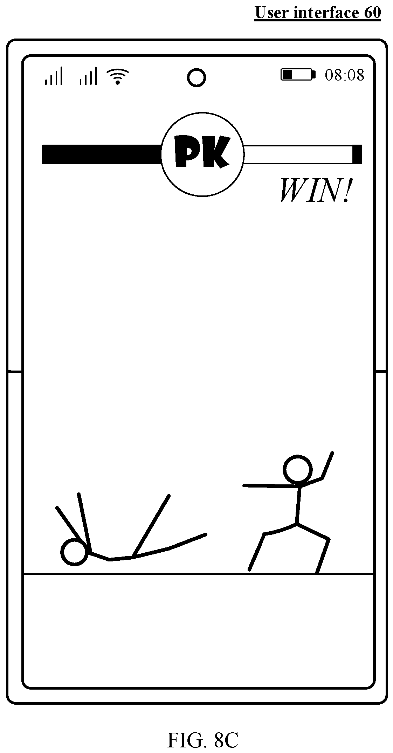

Further, optionally, in the game process, if the user who uses the electronic device 100 wins in the game, the electronic device 100 may display the user interface 60 shown in FIG. 8C on the inner screen.

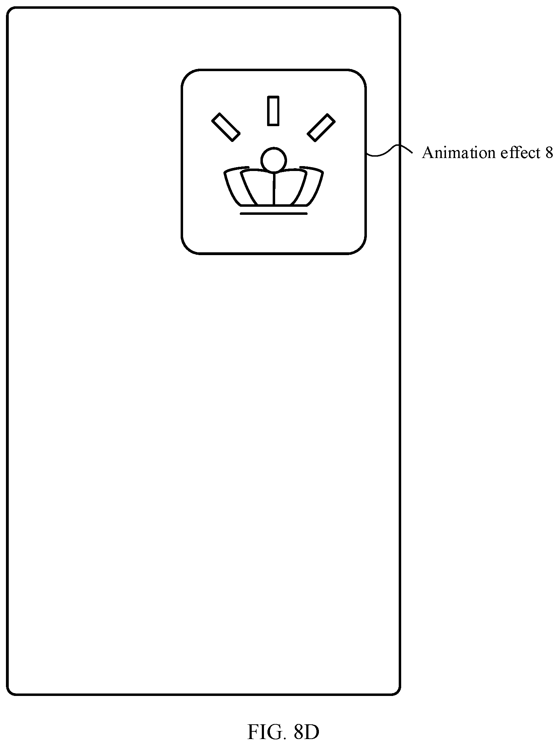

In this case, the electronic device 100 may obtain an event indicating that the user wins in the game, and switch, based on the event, an animation effect displayed on the outer screen to an animation effect 8 shown in FIG. 8D. The animation effect 8 may indicate that the user wins in the game.

For example, the animation effect 8 may be an animation effect that corresponds to a specified event in the game scenario and that is preset in the electronic device 100, or may be an animation effect set by the user for the specified event. A source of the animation effect 8 is not limited in embodiments of this application.

It may be understood that, in addition to the winning event in the game, there may be another event, for example, a defeat event or a player damage event. This is not limited in embodiments of this application.

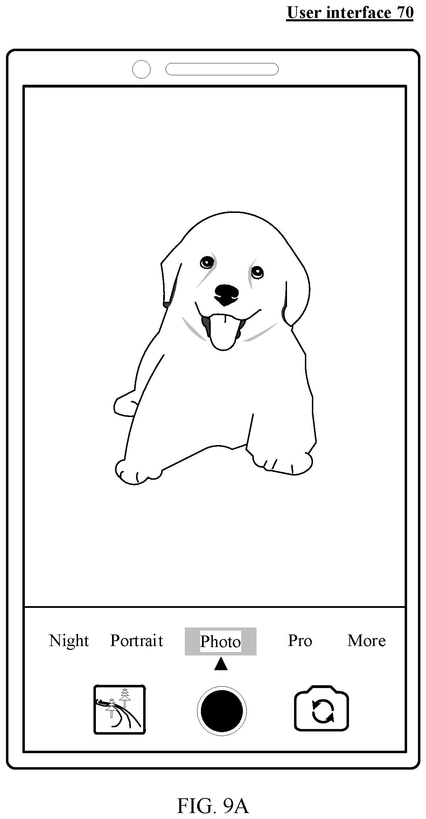

**FIG. 9A to FIG. 9D** **show related user interfaces displayed by the electronic device 100 on the outer screen and the inner screen in an image shooting scenario.**

FIG. 9A shows a user interface 70 displayed on the inner screen when the electronic device 100 runs a camera application. The user interface 70 may be used to display one or more image shooting modes and a preview image captured by a camera in real time.

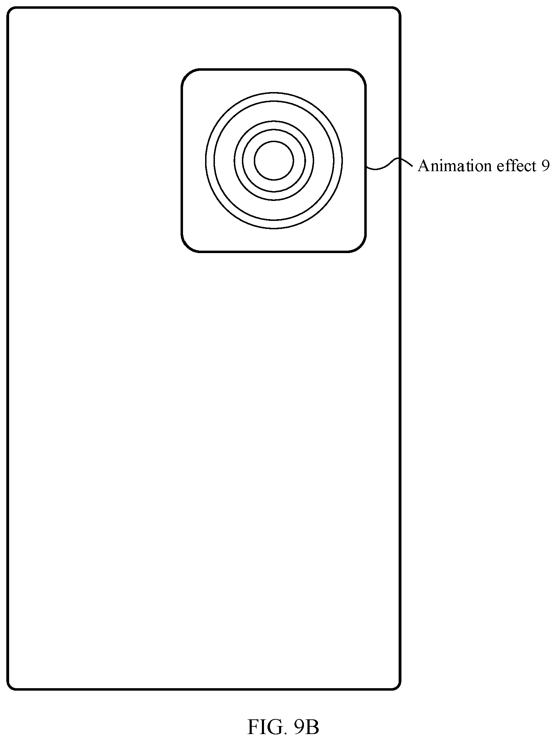

For example, when running the camera application, the electronic device 100 may enter the image shooting scenario, that is, display an animation effect 9 shown in FIG. 9B on the outer screen. The animation effect 9 may be displayed as a camera.

For example, the animation effect 9 may be an animation effect that corresponds to the image shooting scenario and that is preset in the electronic device 100, or may be an animation effect selected by the user. A source of the animation effect 9 is not limited in embodiments of this application.

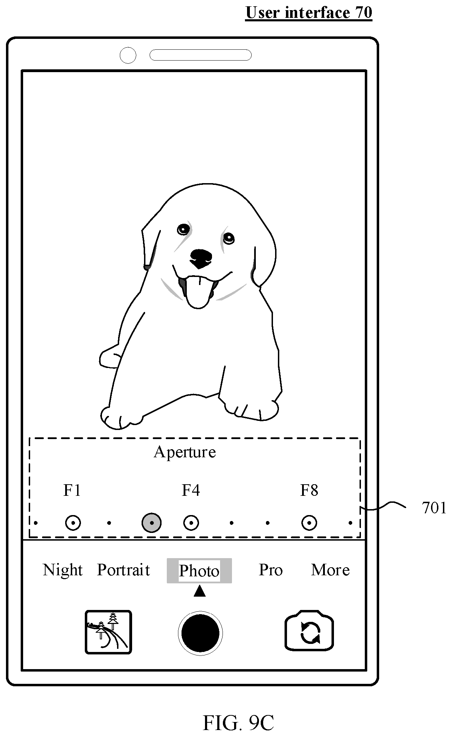

Further, optionally, when the electronic device 100 runs the camera application, if the electronic device 100 detects an operation of adjusting an aperture size by the user, the electronic device 100 may newly display, on the user interface 70, an aperture adjustment option 701 shown in FIG. 9C.

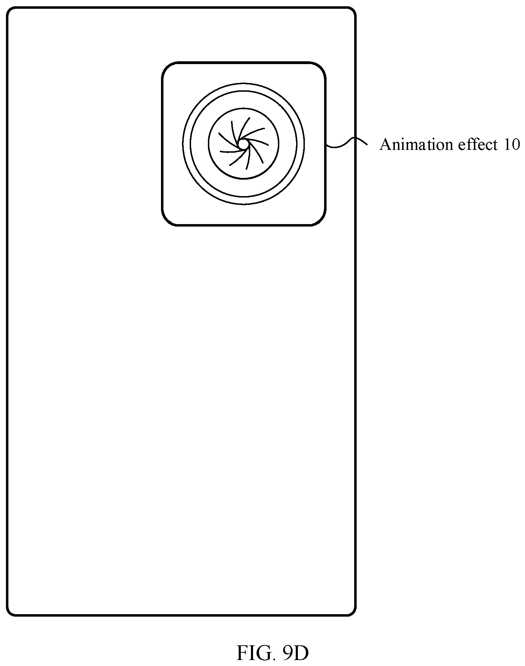

In this case, after the electronic device 100 obtains an event of adjusting the aperture size by the user, the electronic device 100 may switch the animation effect displayed on the outer screen to an animation effect 10 shown in FIG. 9D, where the animation effect 10 may be displayed as a camera with an aperture being adjusted.

For example, in the animation effect 10, an aperture size displayed in the animation effect 10 may be synchronously changed as the user adjusts the aperture size shown in FIG. 9C.

It may be understood that, in addition to adjusting the aperture size, the event may be another event. For example, the event may be an image shooting event. When the electronic device detects the image shooting event, for example, receives an operation performed by the user on an image shooting control, the animation effect displayed on the outer screen may be switched to an animation effect in which a camera shutter is first turned off and then turned on, when the user initiates image shooting.

In other words, a display picture of the animation effect displayed by the electronic device 100 on the outer screen may be changed with a process of an operation initiated by the user. In this way, a picture change of the outer screen is viewed, so that related information about an operation initiated by the user may be learned, for example, duration and time of operation initiation, an object on which the operation is performed, and an adjustment degree of the operation on the object.

In some implementations, to reduce power consumption of the electronic device 100, when the electronic device 100 displays the animation effect on the outer screen, if a preset condition is met, the electronic device 100 may gradually reduce display brightness of the outer screen, or stop displaying the animation effect on the outer screen, or increase a playing interval of the animation effect displayed on the outer screen.

For example, the preset condition may be that a battery level is less than a threshold, duration in which the electronic device 100 is in a specified service scenario is greater than a threshold, the electronic device 100 enables a power saving mode, or the like.

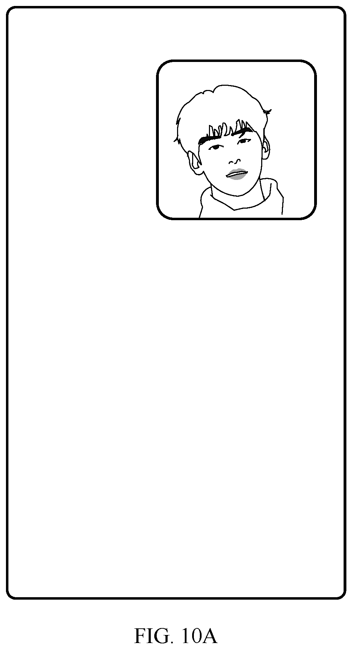

**FIG. 10A to FIG. 10C** **show animation effects with gradually decreasing display brightness that are sequentially displayed by the electronic device 100.**

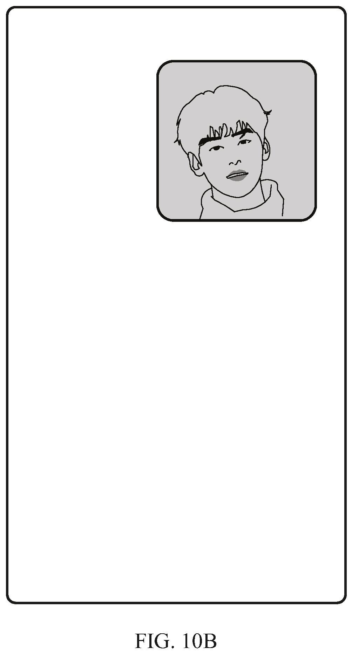

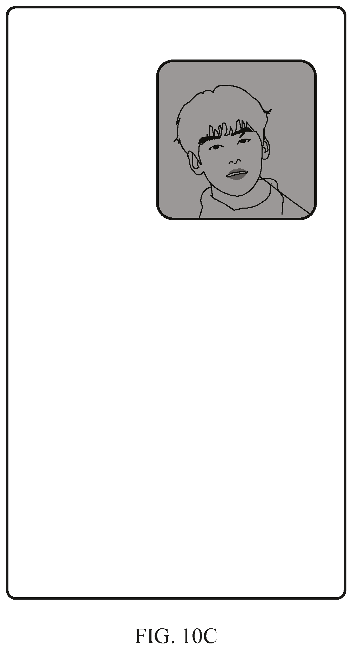

For example, if the electronic device 100 may display an animation effect on the outer screen in a voice call scenario or a video call scenario, after call duration is greater than a threshold, the electronic device 100 may gradually decrease display brightness of the outer screen, for example, sequentially display animation effects shown in FIG. 10A, FIG. 10B, and FIG. 10C on the outer screen. It can be learned that display brightness of the animation effect shown in FIG. 10A is higher than display brightness of the animation effect shown in FIG. 10B, and the display brightness of the animation effect shown in FIG. 10B is higher than display brightness of the animation effect shown in FIG. 10C.

In a specific implementation, after the call duration is greater than the threshold, the electronic device 100 may reduce display brightness of the animation effect, and display the animation effect shown in FIG. 10A. If the electronic device 100 does not exit the voice call scenario or the video call scenario, and preset duration elapses, the electronic device 100 may continue to reduce the display brightness of the animation effect, and display the animation effect shown in FIG. 10B. Further, if the electronic device 100 does not exit the voice call scenario or the video call scenario, and the preset duration elapses, the electronic device 100 may continue to reduce the display brightness of the animation effect, and display the animation effect shown in FIG. 10C.

Further, optionally, there may be a minimum value for the display brightness of the outer screen. After the display brightness of the outer screen reaches the minimum value, the electronic device 100 no longer reduces the display brightness of the outer screen. This can ensure that an animation effect of the outer screen is visible as possible when power consumed by the outer screen is reduced as possible.

When the electronic device 100 meets the foregoing preset condition, the electronic device 100 increases a playing interval of the animation effect displayed on the outer screen. The playing interval refers to interval duration of repeatedly playing the animation effect. For example, the electronic device 100 may pause displaying the animation effect on the outer screen after playing the animation effect once, and play the animation effect again after the pause duration reaches specified interval duration (for example, 1s). Further, if the electronic device 100 reaches a preset condition, the electronic device 100 may prolong the interval duration (for example, 3s), and the electronic device 100 may play the animation effect again after the extended interval duration.

For example, that the electronic device 100 pauses displaying the animation effect on the outer screen may mean that the outer screen is turned off, or may mean that the outer screen maintains a pixel lighted, but a color of the pixel remains black.

It may be understood that, when the preset condition is met, the electronic device 100 may gradually reduce display brightness of the outer screen, and increase a playing interval of the animation effect displayed on the outer screen, to further reduce power consumption of the electronic device 100.

It may be understood that FIG. 3A and FIG. 3B, FIG. 4A to FIG. 4C, FIG. 5A to FIG. 5C, FIG. 6, FIG. 7A to FIG. 7C, FIG. 8A to FIG. 8D, FIG. 9A to FIG. 9D, and FIG. 10A to FIG. 10C are merely examples, and do not constitute a limitation on embodiments of this application.

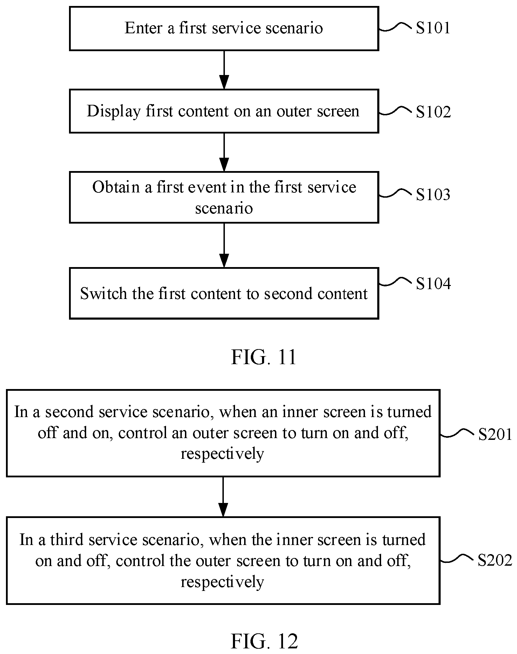

**FIG. 11** **is an overall schematic flowchart of a display method according to an embodiment of this application.**

**S101:** An electronic device 100 enters a first service scenario.

The electronic device 100 may include an outer screen and an inner screen. The inner screen may be used to display a related user interface in the first service scenario, and provide a business service in the first service scenario for a user. The outer screen may be used to display an animation effect when the electronic device 100 is in the first service scenario, to provide a visual information transfer function for the user.

The first service scenario may be a voice call scenario, a video call scenario, a game scenario, an image shooting scenario, or the like. The first service scenario is not limited in embodiments of this application.

For example, that the electronic device 100 enters the first service scenario may be specifically: starting a first application, enabling a first function of a second application, or displaying a specified page on the inner screen.

The voice call scenario is used as an example. If the electronic device 100 starts a phone application or enables a voice call function, the electronic device 100 enters the voice call scenario.

For example, with reference to FIG. 4A, if the electronic device 100 displays the user interface 20 shown in FIG. 4A on the inner screen, the electronic device 100 enters the voice call scenario.

The video call scenario is used as an example. If the electronic device 100 starts a chat application or enables a video call function, the electronic device 100 enters the video call scenario.

For example, with reference to FIG. 5A, if the electronic device 100 displays the user interface 30 shown in FIG. 5A on the inner screen, the electronic device 100 enters the video call scenario.

The game scenario is used as an example. If the electronic device 100 starts a games application, displays a user interface of the games application on the inner screen, or the like, the electronic device 100 enters the game scenario.

For example, with reference to FIG. 8A, if the electronic device 100 joins a game in the games application based on a user operation, and displays the user interface 60 shown in FIG. 8A on the inner screen, the electronic device 100 enters the game scenario.

The image shooting scenario is used as an example. If the electronic device 100 starts a camera application or enables an image shooting function, the electronic device 100 enters the image shooting scenario.

For example, with reference to FIG. 9A, if the electronic device 100 displays the user interface 70 shown in FIG. 9A on the inner screen, the electronic device 100 enters the image shooting scenario.

S102: The electronic device 100 displays first content on the outer screen.

If the electronic device 100 enters the first service scenario, the electronic device 100 may display the first content on the outer screen. In other words, the electronic device 100 may display the first content on the outer screen in response to the first application being started or the first function being enabled.

The first content may include any one or more of the following: a text, a picture, an animation effect, or the like.

For example, the first content may be content set by the electronic device 100 or content selected by the user.

For example, the first content may be content preset by a developer in the electronic device 100, content determined based on a user operation, or content determined by the electronic device 100 based on related information in the first service scenario, for example, the first application or the first function.

Optionally, animation effects corresponding to different service scenarios may be different. For example, if the electronic device 100 enters a second service scenario, for example, starts a third application or enables a second function of a fourth application, the electronic device 100 may display third content on the outer screen. This can enrich the content displayed on the outer screen, so that the user can quickly identify, through a picture displayed on the outer screen, a business scenario in which the electronic device 100 is currently located, thereby increasing information that can be conveyed on the outer screen.

In some implementations, if the first service scenario is the voice call scenario or the video call scenario, the first content may be determined based on information such as a name, a profile picture, and a gender of a call contact. If the first service scenario is the game scenario, the first content may be determined based on information such as a game type, an icon of the games application, and a page of the games application. If the first service scenario is the image shooting scenario, the first content may be determined based on information such as a type of a used camera and an image shooting mode.

For example, with reference to FIG. 3B, the first content may be an animation effect 1 shown in FIG. 3B. Alternatively, with reference to FIG. 4C, if the first service scenario is the voice call scenario, the first content may be an animation effect 2 shown in FIG. 4C. Alternatively, with reference to FIG. 5C, if the first service scenario is the video call scenario, the first content may be an animation effect 3 shown in FIG. 5C. Alternatively, with reference to FIG. 8B, if the first service scenario is the game scenario, the first content may be an animation effect 7 shown in FIG. 8B. Alternatively, with reference to FIG. 9B, if the first service scenario is the image shooting scenario, the first content may be an animation effect 9 shown in FIG. 9B.

In some implementations, a plurality of themes, for example, "soothing", "youth", and "fashion" may be preset in the electronic device 100. Different themes correspond to different display styles. One theme may include a series of animation effects. The electronic device 100 may select a specified theme based on a user operation. In this way, when displaying an animation effect on the outer screen, the electronic device 100 may display an animation effect included in the theme.

Further, optionally, different service scenarios may correspond to different animation effects belonging to the theme. In this way, when the electronic device 100 is in different service scenarios, although content displayed on the outer screen is different, the content still belongs to a same display style, to ensure consistency of styles of pictures displayed on the outer screen.

In some implementations, if the electronic device 100 is a foldable screen device, when the electronic device 100 is in an unfolded state, the electronic device 100 may display the first content on the outer screen.

It should be understood that before the first content is displayed on the outer screen, the outer screen may be in a screen-off state, or information such as time, date, or weather may be displayed on the outer screen.

**S103:** The electronic device 100 obtains a first event in the first service scenario.

That the electronic device 100 obtains the first event in the first service scenario may be: The electronic device 100 detects the first event in the first application or the first function.

For example, the electronic device 100 may determine the first event in the first service scenario based on an operation initiated by the user in the first service scenario or through an application interface.

The operation may include a touch operation performed by the user on the inner screen, an operation performed on a button of the electronic device 100, an operation of moving the mobile electronic device 100, a voice instruction issued by the user, or the like.

In some implementations, if the first service scenario is the voice call scenario or the video call scenario, the first event may be a specified voice keyword uttered by the user who uses the electronic device 100 during a call, a specified voice keyword uttered by a call contact during a call, or the like.

In this embodiment of this application, the electronic device 100 may obtain, through voice recognition, a voice keyword uttered by the user or the call contact during a call.

In some implementations, if the first service scenario is the game scenario, the first event includes one or more of the following: a game progress, a game status, a player status, and the like.

In this embodiment of this application, the electronic device 100 may detect the game status of the user in the game by invoking an interface in the GameReplayManager class.

In some implementations, if the first service scenario is the image shooting scenario, the first event includes one or more of the following: an image shooting operation, a video recording operation, an operation of adjusting an image shooting parameter, and the like. The image shooting parameter may include but is not limited to one or more of the following: an image shooting mode, sensitivity, a shutter speed, a focal length, an aperture size, countdown duration, and the like.

In this embodiment of this application, the electronic device 100 may obtain an event in the image shooting scenario by invoking an interface such as a mode selection interface and a parameter adjustment interface that are exhibited by camera.apk.

**S104:** The electronic device 100 switches the first content to second content.

The second content may be completely different from the first content, or the second content is obtained by modifying the first content. Similar to the first content, the second content may include one or more of the following: a text, a picture, or an animation effect.

The second content may be related to the first event. For example, the second content may indicate the first event.

Further, optionally, display content of the second content may change synchronously with the first event.

For example, the second content may indicate a change of the first event. For example, when the first event is that the user adjusts the first function or the display content, the second content may indicate an adjustment process of the first function or the display content. When the user stops adjusting the first function or the display content, the second content may indicate an adjustment result of the event.

For example, the first event is an operation of adjusting an aperture in the image shooting scenario. In this case, the second content may include an animation effect of a dynamic change of the aperture. For example, when the first event is an operation of opening the aperture in the image shooting scenario, the second content may include an animation effect of opening the aperture. When the first event is an operation of closing down the aperture in the image shooting scenario, the second content may include an animation effect of closing down the aperture.

In this embodiment of this application, if the first event is an adjustment operation performed on a display interface of the first application or the first function, the second content may indicate an adjustment status that is of the display interface of the first application or the first function and that is obtained through the adjustment operation.

Content respectively corresponding to a plurality of events may be preset in the electronic device 100. In this way, when obtaining a specified event, the electronic device 100 may display, on the outer screen, content corresponding to the specified event.

For example, the electronic device 100 obtains a second event in the first service scenario, where the second event and the first event are different. In this case, the electronic device 100 may switch the second content to fourth content, where the fourth content and the second content are different.

Further, optionally, for a type of event, a plurality of types of content may be preset in the electronic device 100, so that the electronic device 100 may select, from the plurality of types of content based on a user operation, content corresponding to the event. This can improve operability of the user, and implement personalized displaying of the outer screen.

In some implementations, the electronic device 100 may add, based on a user operation, an event in the first service scenario and/or content corresponding to the event, to implement personalized customization of the content displayed by the user on the outer screen.

For example, if the first service scenario is the voice call scenario or the video call scenario, the first event is a specified voice keyword uttered by the user who uses the electronic device 100 during a call, and the second content may be content that corresponds to the specified voice keyword and that is set in the electronic device 100. With reference to FIG. 7A, the second content may be an animation effect 4 shown in FIG. 7A.

For example, if the first service scenario is the voice call scenario or the video call scenario, the first event is a specified voice keyword uttered by the user who uses the electronic device 100 during a call, and the second content may be content obtained by overlaying an interface element corresponding to the voice keyword onto the first content. With reference to FIG. 7B, the second content may be an animation effect 5 shown in FIG. 7B.

For example, if the first service scenario is the voice call scenario or the video call scenario, the first content includes a profile picture of a call contact, and the first event is a specified voice keyword uttered by the call contact during a call, the second content is content obtained by modifying facial expression in the first content based on emotion carried in the specified voice keyword. With reference to FIG. 7C, the second content may be an animation effect 6 shown in FIG. 7C.

For example, if the first service scenario is the game scenario, the first event is that the user wins in the game, and the second content may be an animation effect 8 shown in FIG. 8D.

For example, if the first service scenario is the image shooting scenario, the first event is an operation of adjusting an aperture, and the second content may be an animation effect 10 shown in FIG. 9D.

In some implementations, the second content may be displayed only for preset duration, for example, 3 seconds. If the electronic device 100 obtains another event in the first service scenario after the preset duration, the electronic device 100 may switch the second content to the first content. In this way, the first content is equivalent to initial content displayed on the outer screen in the first service scenario. After detecting an event in the first service scenario, the electronic device 100 may temporarily change, based on the event, the content displayed on the outer screen, thereby adding interest to outer screen displaying.

In some implementations, after the service scenario ends, the electronic device 100 may stop displaying the content in the service scenario on the outer screen. In other words, if the electronic device 100 stops running the first application or stops using the first function, the electronic device 100 stops displaying the second content on the outer screen.

In some implementations, if the electronic device 100 is a foldable screen device, when the electronic device 100 is switched to a folded state, the electronic device 100 may stop displaying the content in the service scenario on the outer screen.

In some implementations, to reduce power consumption of the electronic device 100, if the electronic device 100 meets a preset condition, the electronic device 100 may perform any one of the following:
(1) Display brightness of the outer screen is reduced.

For example, when the preset condition is met, the electronic device 100 may reduce the display brightness only once, or the electronic device 100 may reduce the display brightness by a specific amount at regular intervals. In this way, the electronic device 100 may reduce the display brightness of the outer screen in a stepwise manner over time.

Further, minimum display brightness of the electronic device 100 may be preset. After the display brightness of the outer screen is reduced to the minimum display brightness, the display brightness is stopped being reduced.

(2) If the second content includes an animation effect, a playing interval of the animation effect displayed on the outer screen is increased.

For example, when the preset condition is met, the electronic device 100 may increase the playing interval of the animation effect only once, or the electronic device 100 may increase the playing interval by a specific amount at regular intervals. In this way, the electronic device 100 may reduce the playing interval of the animation effect on the outer screen in a stepwise manner over time.

Further, a maximum playing interval of the electronic device 100 may be preset. If the playing interval of the animation effect on the outer screen is increased to the maximum playing interval, the playing interval is stopped being increased.

(3) The second content is stopped being displayed on the outer screen.

In other words, if the electronic device 100 meets the preset condition, the electronic device 100 stops displaying the second content on the outer screen.

The preset condition may include any one or more of the following: Duration in which the electronic device 100 is in the first service scenario reaches first duration, a battery level of the electronic device 100 is less than a first threshold, the electronic device 100 enables a power saving mode, and the like.

For example, with reference to FIG. 10A to FIG. 10C, in the voice call scenario or the video call scenario, if call duration is greater than a threshold, the electronic device 100 may gradually decrease display brightness of the outer screen, that is, sequentially display animation effects shown in FIG. 10A to FIG. 10C. Display brightness of an animation effect displayed on the outer screen shown in FIG. 10A is higher than display brightness of an animation effect displayed on the outer screen shown in FIG. 10B, and the display brightness of the animation effect displayed on the outer screen shown in FIG. 10B is higher than display brightness of an animation effect displayed on the outer screen shown in FIG. 10C.

It may be understood that the preset condition may alternatively be another condition. This is not limited in embodiments of this application.

In some implementations, the electronic device 100 may include an outer screen display function. The outer screen display function may be used to display specific content on the outer screen when the electronic device 100 is in a specified service scenario, for example, the first content and the second content mentioned above.

For example, the electronic device 100 may enable or disable the function based on a user operation, thereby improving user operability.

For example, the electronic device 100 may enable or disable the function when the foregoing preset condition is met.

For example, the electronic device 100 may disable the function when the battery level is less than the first threshold. For example, if the battery level of the electronic device 100 decreases to the first threshold during displaying of the second content, the electronic device 100 may stop displaying the second content on the outer screen.

Further, optionally, if the battery level of the electronic device 100 is less than the first threshold in the specified service scenario, the electronic device 100 may continue to maintain the function enabled, and after the electronic device 100 exits the specified service scenario, the function is disabled. For example, the electronic device 100 is in the voice call scenario and is in a process of displaying the first content. If the battery level of the electronic device 100 is less than the first threshold in the voice call process, the electronic device 100 may continue to display the first content until the voice call ends, and then disable displaying of the first content.

It may be understood that the electronic device 100 may alternatively directly disable the function when detecting that the battery level is less than the first threshold, without a need to pose a limitation that the electronic device 100 is in a process of the specified service scenario.

For example, the outer screen display function may be controlled by using a localProp value in a system.

In some implementations, the electronic device 100 may further identify a posture of the electronic device 100 before or during displaying the first content or the second content on the outer screen. If the electronic device 100 is placed on the desktop, the outer screen is blocked. In this case, the electronic device 100 may stop displaying the content on the outer screen, thereby reducing power consumption of the electronic device 100.

In some implementations, the first content or the second content displayed by the electronic device 100 on the outer screen may include a part of content displayed by the electronic device 100 on the inner screen. For example, in the video call scenario, if the content displayed by the electronic device 100 on the inner screen includes a real-time facial image of a call contact, the content displayed by the electronic device 100 on the outer screen may be a plurality of frames of images captured based on the facial image displayed on the inner screen. In this way, when the electronic device 100 is in the video call scenario, the content displayed on the outer screen may be an animated image of a face of the call contact during a call of the user.

In some implementations, if the content displayed by the electronic device 100 on the outer screen includes an animation effect, the animation effect may be a video file, for example, with a file name extension of .mp4, or may be a visual animation effect synthesized based on picture frames, for example, with a file name extension of .gif, or may be a visual animation effect synthesized based on an upper-layer application or underlying hardware data, for example, a waveform visual animation effect where amplitude changes in sync with a pitch of a recognized voice.

Based on the foregoing different animation effect formats, the electronic device 100 may display the animation effect by using different modules, to implement a display effect with a better animation effect.

For example, the electronic device 100 may display the animation effect of the video file format by using a video playing module, display the visual animation effect synthesized based on the picture frames by using a frame animation playing module, and display the visual animation effect synthesized based on the data by using a Web engine module.

It may be understood that the animation effect displayed by the electronic device 100 may further include another file format. This is not limited in embodiments of this application.

In some implementations, when the electronic device 100 is in a service scenario, the electronic device 100 may further control a screen-on/off state of the outer screen based on a screen-on/off state of the inner screen.

For example, display modes of the inner screen and the outer screen may include a mutually exclusive collaboration mode and a synchronized collaboration mode.

In the mutually exclusive collaboration mode, the outer screen and the inner screen maintain opposite screen-on/off states, that is, when the inner screen is turned on, the outer screen is turned off, and when the inner screen is turned off, the outer screen is turned on. In addition, in the synchronized collaboration mode, the outer screen and the inner screen maintain a same screen-on/off state, that is, when the inner screen is turned on, the outer screen is turned on; and when the inner screen is turned off, the outer screen is turned off.

The electronic device 100 may determine the display modes of the inner screen and the outer screen based on a current service scenario.

**For example,** **FIG. 12** **is a schematic flowchart of a method for determining display modes of an inner screen and an outer screen by an electronic device 100.**

**S201:** In a second service scenario, when the inner screen is turned off and on, the electronic device 100 controls the outer screen to turn on and off, respectively.

For example, the electronic device 100 may determine a current service scenario based on a currently running application or a used function.

For specific descriptions of determining a service scenario by the electronic device 100, refer to related content in step S101. Details are not described herein again.

For example, the second service scenario may be a voice call scenario.

If the electronic device 100 is in the second service scenario, the electronic device 100 may enter a mutually exclusive collaboration mode. Specifically, when the inner screen is turned off, the electronic device 100 may turn on the outer screen, to display content in the second service scenario on the outer screen, or further switch, based on an event in the second service scenario, content displayed on the outer screen. In addition, when the inner screen is turned on, the electronic device 100 may turn off the outer screen. In this way, even if the electronic device 100 is still in the second service scenario, the outer screen does not display content corresponding to the service scenario.

With reference to the foregoing steps S101 to S104, after step S101 is performed and before step S102 is performed, the inner screen of the electronic device 100 may be in a screen-off state. In this way, when the inner screen is turned off, the electronic device 100 may turn on the outer screen, and display first content on the outer screen. In addition, after step S102 is performed, and when it is detected that the inner screen is in a screen-on state, the electronic device 100 may control the outer screen to turn off. In this way, when the inner screen is turned on, the electronic device 100 may turn off the outer screen.

For example, FIG. 4B and FIG. 4C show display statuses of the inner screen and the outer screen in a voice call scenario. FIG. 4B shows that the inner screen of the electronic device 100 is in the screen-off state, and FIG. 4C shows that the outer screen of the electronic device 100 is in a screen-on state.

S202: In a third service scenario, when the inner screen is turned on and off, the electronic device 100 controls the outer screen to turn on and off, respectively.

For example, the third service scenario may be a video call scenario, a game scenario, or an image shooting scenario.

If the electronic device 100 is in the third service scenario, the electronic device 100 enters a synchronized collaboration mode. Specifically, when the inner screen is turned on, the electronic device 100 may turn on the outer screen, to display an animation effect in the third service scenario on the outer screen, or further switch, based on an event in the third service scenario, the animation effect displayed on the outer screen. In addition, when the inner screen is turned off, the electronic device 100 may turn off the inner screen. In this way, even if the electronic device 100 is in the third service scenario, the outer screen does not display the animation effect.

With reference to the foregoing steps S101 to S104, after step S101 is performed and before step S102 is performed, the inner screen of the electronic device 100 may be in a screen-on state. In this way, when the inner screen is turned on, the electronic device 100 may turn on the outer screen, and display first content on the outer screen. In addition, after step S102 is performed, and when it is detected that the inner screen is in a screen-off state, the electronic device 100 may control the outer screen to turn off. In this way, when the inner screen is turned off the electronic device 100 may turn off the outer screen.

For example, FIG. 5B and FIG. 5C show display statuses of the inner screen and the outer screen in a video call scenario. FIG. 5B shows that the inner screen of the electronic device 100 is in the screen-on state, and FIG. 5C shows that the outer screen of the electronic device 100 is in a screen-on state.

In some implementations, after determining to enter a specified service scenario, the electronic device 100 may first determine display modules of the inner screen and the outer screen, and then determine the display status of the outer screen with reference to the display status of the inner screen. When it is determined that the outer screen is turned on, content that needs to be displayed on the outer screen is determined, so that content in the specified service scenario is displayed on the outer screen. When it is determined that the outer screen is turned off, the electronic device 100 does not need to determine the content displayed on the outer screen. This can reduce a computation amount of the electronic device 100, and reduce power consumption of the electronic device 100.

In an implementation, the electronic device 100 may distinguish between different display modes of the inner screen and the outer screen by setting a parameter value. For example, the electronic device 100 may set a value of SystemProperty, including 0, 1, and 2. If the value of SystemProperty is 0 or the value of SystemProperty is null, it indicates that collaborative displaying between the inner screen and the outer screen is not enabled. If the value of SystemProperty is 1, it indicates that the display modes of the inner screen and the outer screen are a mutually exclusive collaboration mode. If the value of SystemProperty is 2, it indicates that the display modes of the inner screen and the outer screen are a synchronized collaboration mode. The electronic device 100 may set the value of SystemProperty by detecting whether the electronic device 100 enters the specified service scenario and whether the service scenario is the second service scenario or the third service scenario, to implement collaborative displaying between the inner screen and the outer screen.

It should be understood that a sequence of step S201 and step S202 is not used to limit an execution sequence of step S201 and step S202. The electronic device 100 may determine, based on the current service scenario, whether to perform step S201 or step S202.

It can be learned from steps S201 and S202 that the electronic device 100 may control the display status of the outer screen based on the display status of the inner screen, thereby implementing collaboration between the inner screen and the outer screen, and effectively reducing power consumption of the electronic device 100.

The following describes a detailed execution process of the electronic device 100 by using a voice call scenario as an example.

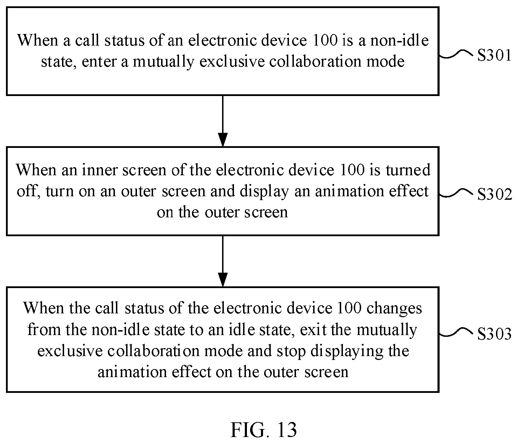

FIG. 13 is a schematic flowchart of another display method according to an embodiment of this application.

S301: When a call status of the electronic device 100 is a non-idle state, the electronic device 100 enters a mutually exclusive collaboration mode.

For example, in this embodiment of this application, the call status may include the following two states:

### (1) Idle state

When the electronic device 100 does not make any call, the electronic device 100 is in the idle state. In the idle state, the electronic device 100 may choose to make a call or perform another operation.

### (2) Non-idle state

The non-idle state may include but is not limited to the following states: a ringing state, a call-in-progress state, and a calling state.

When receiving an incoming call, the electronic device 100 is in the ringing state. In the ringing state, the electronic device 100 may choose to answer or decline the incoming call.

When the electronic device 100 is on a call, the electronic device 100 is in the call-in-progress state. In the call-in-progress state, the electronic device 100 may choose to end the call or perform another operation.

When the electronic device 100 makes a call to another device and waits for the peer party to answer, the electronic device 100 is in the calling state. In the calling state, the electronic device 100 may choose to hang up the call or perform another operation.

Generally, in the idle state, if receiving the incoming call, the electronic device 100 enters the ringing state; and if making a call to the another device, the electronic device 100 enters the calling state. Further, in the ringing state, if the electronic device 100 chooses to answer the incoming call, the electronic device 100 enters the call-in-progress state; and in the calling state, if a peer party answers the incoming call, the electronic device 100 enters the call-in-progress state. In addition, in the ringing state, the calling state, or the call-in-progress state, the electronic device 100 may hang up the call and may switch to the idle state.

If the electronic device 100 receives the incoming call or makes a call to the another device, the electronic device 100 may switch from the idle state to the non-idle state. In this case, the electronic device 100 may enter a voice call scenario.

When the electronic device 100 enters the voice call scenario, the electronic device 100 may enter the mutually exclusive collaboration mode.

In the mutually exclusive collaboration mode, a display status of an outer screen is opposite to a display status of an inner screen. To be specific, if the inner screen is turned on, the outer screen is turned off; or if the inner screen is turned off, the outer screen is turned on.

In some implementations, if the electronic device 100 is in another service scenario like a video call scenario, a game scenario, or an image shooting scenario, the electronic device 100 may enter a synchronized collaboration mode.

In the synchronized collaboration mode, a display status of an outer screen is the same as a display status of an inner screen. To be specific, if the inner screen is turned on, the outer screen is turned on; or if the inner screen is turned off, the outer screen is turned off.

For example, for a specific process of interaction between the modules of the electronic device 100 in step S301, refer to the subsequent steps S401 to S403.

S302: When the inner screen of the electronic device 100 is turned off, the electronic device 100 turns on the outer screen and displays an animation effect on the outer screen.

An event of triggering the inner screen to turn on or off may include but is not limited to: turning off the screen for a long time, pressing a power button, a user approaching or moving away, plugging or unplugging a USB, a message notification, a change in a folding form of a device, or the like.

For example, if the electronic device 100 detects, during a call, that the user approaches the electronic device 100, the electronic device 100 may control the inner screen to turn off.

Further, optionally, in the voice call scenario, the electronic device 100 may further detect that the user is far away from the electronic device 100. In this case, the electronic device 100 may control the inner screen to turn on.

It may be understood that, if the electronic device 100 enters the synchronized collaboration mode, when the inner screen of the electronic device 100 is turned off, the electronic device 100 may turn off the outer screen; and when the inner screen of the electronic device 100 is turned on, the electronic device 100 may turn on the outer screen and display the animation effect on the outer screen.

For example, the electronic device 100 may determine, based on information about a call contact in a current call status of the electronic device 100, the animation effect displayed on the outer screen. The information may include a name, a profile picture, a gender, and the like of the contact.

For example, animation effects corresponding to different voice keywords may be stored in a database of the electronic device 100. The electronic device 100 may further recognize, during a call, a voice keyword uttered by the user or the call contact, and switch the animation effect displayed on the outer screen to an animation effect corresponding to the voice keyword.

Further, optionally, if no matching voice keyword is found in the database, the electronic device 100 may select a preset default animation effect, or determine, based on information about the call contact, the animation effect displayed on the outer screen.

It may be understood that the voice keyword stored in the database may be maintained and updated through system upgrade.

A manner of determining the animation effect displayed on the outer screen is not limited in embodiments of this application.

In some implementations, after the outer screen is turned on, the electronic device 100 may further determine whether a current call status is still the non-idle state, and when determining that the electronic device 100 is in the non-idle state, determine the animation effect displayed on the outer screen.

It may be understood that, if the electronic device 100 is a foldable screen device, and during a call, if the electronic device 100 is in a speaker mode, the electronic device 100 may switch from an unfolded state to a folded state based on a user operation, and transfer call information from the inner screen to the outer screen for displaying.

Therefore, if the electronic device 100 is a foldable screen device, when determining that the electronic device 100 is in the unfolded state, the electronic device 100 may determine the animation effect displayed on the outer screen. If the electronic device 100 is in the folded state, the electronic device 100 may stop displaying the animation effect on the outer screen.

For example, for a specific process of interaction between the modules of the electronic device 100 in step S302, refer to the subsequent steps S404 to S410.

S303: When the call status of the electronic device 100 changes from the non-idle state to the idle state, the electronic device 100 exits the mutually exclusive collaboration mode and stops displaying the animation effect on the outer screen.

During a voice call, if the electronic device 100 detects a call hang-up operation of the user or the call contact hangs up the call, the electronic device 100 may end the call, and switch the call status from the non-idle state to the idle state.

In this case, the electronic device 100 may exit the voice call scenario.

If the electronic device 100 exits the voice call scenario, the electronic device 100 may exit the mutually exclusive collaboration mode.

For example, for a specific process of interaction between the modules of the electronic device 100 in step S303, refer to the subsequent steps S411 to S414.

It can be learned from steps S301 to S303 that, the electronic device 100 may monitor the call status, and identify the voice call scenario based on a change of the call status, to implement collaboration and cooperation between the inner screen and the outer screen in a voice service scenario, and when the outer screen is turned on, control the outer screen to display a corresponding animation effect in the voice call scenario. This enhances linkage between the inner screen and the outer screen in the voice service scenario, and adds interest to content displayed on the outer screen.

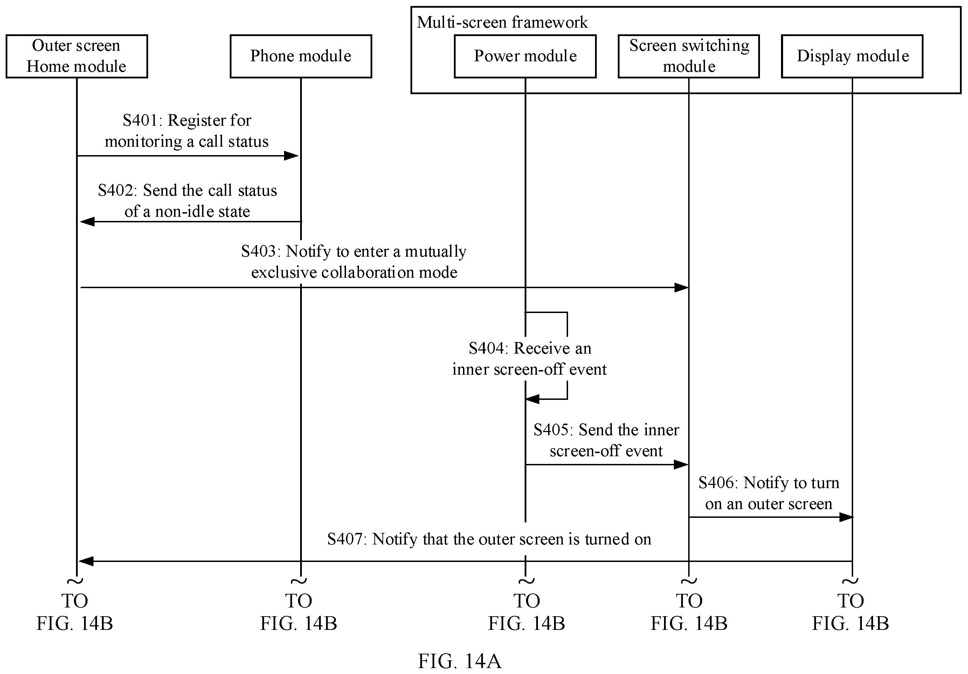

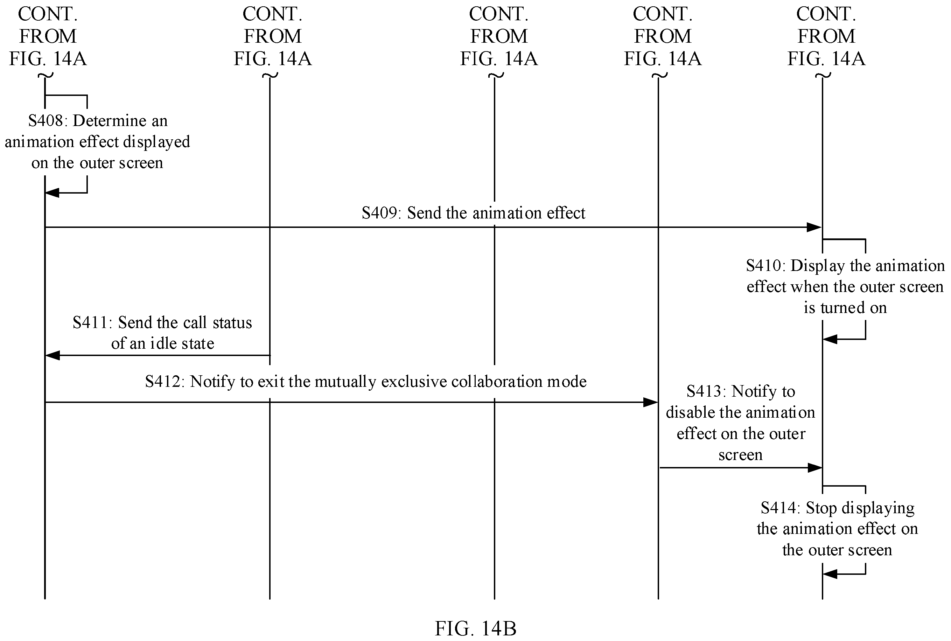

**FIG. 14A** **and** **FIG. 14B** **are a diagram of interaction between internal modules of an electronic device 100 in a voice call scenario according to an embodiment of this application.**

For example, in the voice call scenario, modules of the electronic device 100 mainly include an outer screen Home module, a phone module, and a multi-screen framework.

The outer screen Home module may be configured to: detect a call status, transfer display modes of an inner screen and an outer screen, determine an animation effect displayed on the outer screen, and the like. The phone module may be configured to monitor a call status of the electronic device 100, including an idle state without a call activity and a non-idle state with a call activity. The multi-screen framework may include a power module, a screen switching module, and a display module. The power module may be configured to: monitor a screen-on/off event of a display screen (for example, the inner screen), and notify the display screen to power on/off. The screen switching module may be configured to manage screen switching logic of the inner screen and the outer screen. The display module may be configured to manage displaying of the display screen.

**S401:** The outer screen Home module registers with the phone module for monitoring the call status.

The outer screen Home module can start monitoring the call status. In this way, when the electronic device 100 is in a specified call status, the electronic device 100 can quickly display the animation effect on the outer screen in the voice call scenario.

**S402:** The phone module sends the call status of the non-idle state to the outer screen Home module.

If the electronic device 100 receives an incoming call or makes a call to another device, the electronic device 100 may switch from the idle state to the non-idle state, and send the post-switching call status to the outer screen Home module by using the phone module.

It may be understood that, when the call status changes, the phone module may send a changed call status to the outer screen Home module, so that the outer screen Home module can control displaying of the outer screen in time based on the changed call status.

**S403:** The outer screen Home module notifies the screen switching module to enter a mutually exclusive collaboration mode.

For example, when the electronic device 100 is in the voice call scenario, the outer screen Home module may notify the screen switching module to enter the mutually exclusive collaboration mode.

For example, during internal implementation, the outer screen Home module may set a value of SystemProperty to 1.

In some implementations, if the electronic device 100 is in another service scenario like a video call scenario, a game scenario, or an image shooting scenario, the outer screen Home module may notify the screen switching module to enter a synchronized collaboration mode.

**S404:** The power module receives an inner screen-off event.

If the power module receives the inner screen-off event, for example, receives, during a call, an event that a user approaches the electronic device 100, the power module may control, based on the inner screen-off event, the inner screen to turn off.

Further, optionally, in the voice call scenario, the electronic device 100 may further detect that the user is far away from the electronic device 100. In this case, the electronic device 100 may send an inner screen-on event to the power module, and control, based on the inner screen-on event, the inner screen to turn on.

It may be understood that step S404 may be performed before or after any one of steps S401 to S403. This is not limited in embodiments of this application.

**S405:** The power module sends the inner screen-off event to the screen switching module.

The power module may send the inner screen-off event to the screen switching module before or after the inner screen is turned on, and the screen switching module controls the outer screen to turn on when the inner screen is turned off.

It may be understood that, if the power module receives the inner screen-on event, the power module may send the inner screen-on event to the screen switching module, so that the screen switching module can control, based on the inner screen-on event, the outer screen to turn off when the inner screen is turned on.

It may be understood that step S405 may be performed before or after any one of steps S401 to S403, and needs to be performed only after step S404. This is not limited in embodiments of this application.

**S406:** The screen switching module notifies the display module to turn on the outer screen.

After determining that the display module is in the mutually exclusive collaboration mode, the screen switching module may notify the display module to turn on the outer screen when the inner screen is turned off, and turn off the outer screen when the inner screen is turned on.

Because the screen switching module receives the inner screen-off event, the screen switching module may notify the display module to turn on the outer screen.

Further, if the screen switching module receives the inner screen-on event, the screen switching module may notify the display module to turn off the outer screen.

It may be understood that, if determining that a display mode is the synchronized collaboration mode, the screen switching module may notify the display module to turn off the outer screen when the inner screen is turned off, and turn on the outer screen when the inner screen is turned on.

**S407:** The display module notifies the outer screen Home module that the outer screen is turned on.

For example, after the outer screen is turned on, the display module may notify the outer screen Home module that the outer screen is turned on, so that the outer screen Home module determines the animation effect displayed on the outer screen.

**S408:** The outer screen Home module determines the animation effect displayed on the outer screen.

For example, the outer screen Home module may determine, based on a current service scenario, the animation effect displayed on the outer screen. For example, animation effects corresponding to different service scenarios may be preset in the electronic device 100, and the outer screen Home module may select an animation effect corresponding to a voice service scenario as an animation effect displayed on the outer screen this time.

For example, the outer screen Home module may determine, as the animation effect displayed on the outer screen, an animation effect selected by the user.

For example, the outer screen Home module may determine, based on information about a call contact in a current call status of the electronic device 100, the animation effect displayed on the outer screen.

For example, the outer screen Home module may include a voice recognition module, and the voice recognition module may be configured to recognize a voice keyword during a call. The outer screen Home module may match the voice keyword with voice keywords in a database, and if the voice keyword in the database is found, determine, as the animation effect displayed on the outer screen, an animation effect corresponding to the voice keyword in the database.

Further, optionally, if no matching voice keyword is found in the database, the outer screen Home module may select a preset default animation effect, or determine, based on the information about the call contact, the animation effect displayed on the outer screen.

In some implementations, after the outer screen is turned on, the outer screen Home module may further determine whether the current call status is still the non-idle state, and when determining that the electronic device 100 is in the non-idle state, determine the animation effect displayed on the outer screen.

It may be understood that, if the electronic device 100 is a foldable screen device, and during a call, if the electronic device 100 is in a speaker mode, the electronic device 100 may switch from an unfolded state to a folded state based on a user operation, and transfer call information from the inner screen to the outer screen for displaying.

Therefore, if the electronic device 100 is a foldable screen device, the outer screen Home module may further determine whether the electronic device 100 is in the unfolded state. When determining that the electronic device 100 is in the unfolded state, the outer screen Home module may determine the animation effect displayed on the outer screen. If the electronic device 100 is in the folded state, the outer screen Home module may stop displaying the animation effect on the outer screen, without a need to determine the animation effect displayed on the outer screen.

**S409:** The outer screen Home module sends the animation effect to the display module.

After the animation effect is determined, the outer screen Home module may send the animation effect to the display module.

**S410:** The display module displays the animation effect when the outer screen is turned on.

In this way, the electronic device 100 can display the animation effect on the outer screen during a voice call process of the user.

In addition, in a voice call state, if the inner screen is turned on, the display module may control the outer screen to turn off.

**S411:** The phone module sends a call status of the idle state to the outer screen Home module.

**S412:** The outer screen Home module notifies the screen switching module to exit the mutually exclusive collaboration mode.

If the electronic device 100 exits the voice call scenario, the outer screen Home module may notify the screen switching module to exit the mutually exclusive collaboration mode.

For example, during internal implementation, the outer screen Home module may set a value of SystemProperty to 0.

**S413:** The screen switching module notifies the display module to disable the animation effect on the outer screen.

**S414:** The display module stops displaying the animation effect on the outer screen.

It can be learned from steps S401 to S414 that, the electronic device 100 may monitor the call status to display the animation effect on the outer screen and control collaborative displaying between the inner screen and the outer screen in the voice call state, to enhance coordination between the inner screen and the outer screen, expand application scenarios of the outer screen, and improve a utilization rate of the outer screen.

For specific content that is not described in detail in steps S401 to S414, refer to related descriptions in steps S401 to S403. Details are not described herein again.

It may be understood that the foregoing steps S401 to S414 show only an interaction process between modules of the electronic device 100 in the voice call scenario. In another service scenario, an interaction process between modules of the electronic device 100 is similar.

A game scenario is used as an example. In the game scenario, steps S406 to S410, S413, and S414 are similar to those in the voice call scenario. A difference is that the phone module shown in FIG. 13 may be replaced with a game module. The game module may be configured to identify whether the electronic device 100 starts a games application or enables a game function. If the game module identifies that the electronic device 100 starts the games application or enables the game function, it is determined that the electronic device 100 enters the game scenario. In this case, the game module may send, to the outer screen Home module, indication information for entering the game scenario, and the outer screen Home module may notify the screen switching module to enter the synchronized collaboration mode. In this way, the screen switching module may turn on the outer screen when the inner screen is turned on, and turn off the outer screen when the inner screen is turned off. Then, if the game module identifies that the electronic device 100 exits the games application or disables the game function, it is determined that the electronic device 100 exits the game scenario. In this case, the game module may send, to the outer screen Home module, indication information for exiting the game, so that the outer screen Home module notifies the screen switching module to exit the synchronized collaboration mode.

Specifically, a previous interaction process of the modules of the electronic device 100 in another service scenario is not described herein again.

It should be noted that, in FIG. 14A and FIG. 14B, an example in which content displayed on the outer screen is an animation effect is used to describe in detail an interaction process between the modules of the electronic device 100. The content displayed by the electronic device 100 on the outer screen may alternatively be other content such as a text or a picture. This is not limited in embodiments of this application.

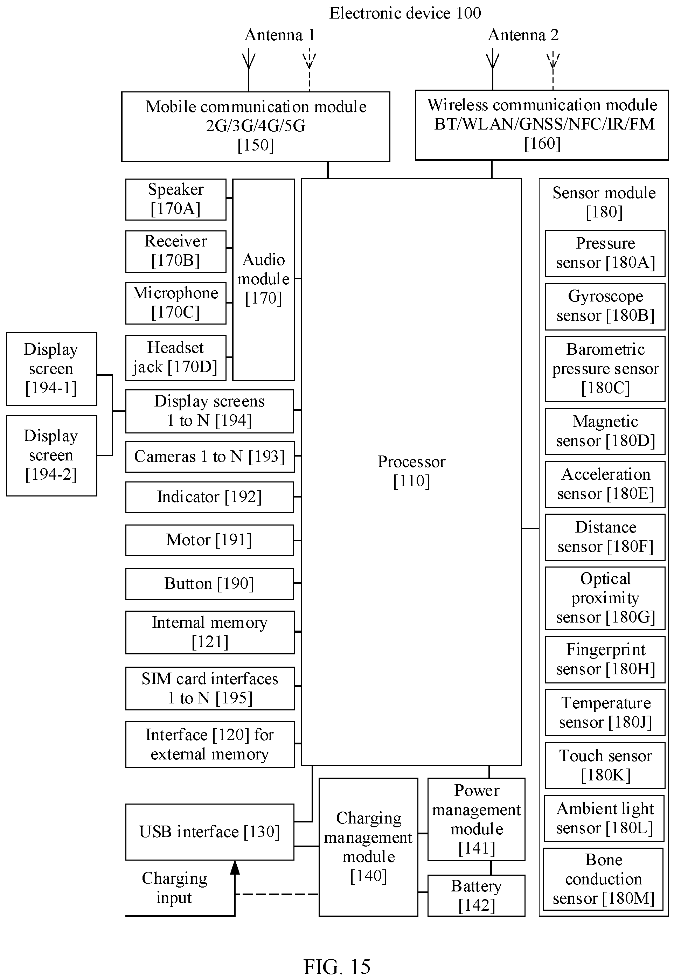

**FIG. 15** **is a diagram of a hardware structure of an electronic device 100 according to an embodiment of this application.**

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not limited in embodiments of this application.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or a combination of some components, or splits from some components, or a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a timing signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

**In some implementations, the processor 110 may be configured to: detect whether the electronic device 100 enters a specified service scenario, and determine content to be displayed on an outer screen.**

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna in the electronic device 100 may be used to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video on the display screen 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology.

The electronic device 100 implements a display function through the GPU, the display screen 194, the application processor, and the like. The GPU is a microprocessor for image processing, and is connected to the display screen 194 and the application processor. The GPU is configured to: perform mathematical and geometric computation, and render an image. The processor 110 may include one or more GPUs that execute program instructions to generate or change displayed information.

The display screen 194 is configured to display an image, a video, and the like. The display screen 194 includes a display panel. In some embodiments, the electronic device may include one or N display screens 194, where N is a positive integer greater than 1.

**In some implementations, the display screens 194 may include a display screen 194-1 and a display screen 194-2. The display screen 194-1 may be an inner screen, and the display screen 194-2 may be an outer screen. The display screen 194-1 may be used to display a related user interface of the electronic device 100 after the electronic device 100 enters a specified service scenario, for example, a camera preview interface in an image shooting scenario or a video call interface in a video call scenario. The display screen 194-2 may be used to display content in the specified service scenario, for example, the foregoing mentioned animation effects 1 to 10.**

**For specific content displayed on the display screen 194, refer to the content shown in** **FIG. 3A** **and** **FIG. 3B****,** **FIG. 4A to FIG. 4C****,** **FIG. 5A to FIG. 5C****,** **FIG. 6****,** **FIG. 7A to FIG. 7C****,** **FIG. 8A to FIG. 8D****,** **FIG. 9A to FIG. 9D****, and** **FIG. 10A to FIG. 10C****. Details are not described herein again.**

The electronic device 100 may implement an image shooting function through the ISP, the camera 193, the video codec, the GPU, the display screen 194, the application processor, and the like.

The ISP is configured to process data fed back by the camera 193. For example, during image shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of an image shooting scenario. In some embodiments, the ISP may be disposed in the camera 193.

The camera 193 is configured to capture a static image or a video. In some embodiments, the electronic device 100 may include one or N cameras 193, where N is a positive integer greater than 1.

The internal memory 121 may include one or more random access memories (random access memories, RAMs) and one or more non-volatile memories (non-volatile memories, NVMs).

The random access memory may be directly read and written by the processor 110. The random access memory may be configured to store an executable program (for example, machine instructions) in an operating system or another running program, and may be further configured to store data of a user, data of an application, and the like.

The non-volatile memory may also store an executable program, data of a user and an application, and the like, which may be pre-loaded to the random access memory for the processor 110 to directly perform a read or write operation.

**In some implementations, the internal memory 121 may be configured to store content displayed on the outer screen of the electronic device 100 in different service scenarios.**

The interface 120 for external memory may be configured to connect to an external non-volatile memory, to expand a storage capability of the electronic device 100. The external non-volatile memory communicates with the processor 110 through the interface 120 for external memory, to implement a data storage function. For example, files such as music and videos are stored in the external non-volatile memory.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to: encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to capture a sound signal and implement a noise reduction function. In some other embodiments, three, four, or more microphones 170C may alternatively be disposed in the electronic device 100, to capture a sound signal, implement noise reduction, and identify a sound source, so as to implement a directional recording function and the like.

The gyroscope sensor 180B may be configured to determine a moving posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during image shooting. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may be further used in a navigation scenario and a somatic game scenario.

The magnetic sensor 180D includes a Hall effect sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, the acceleration sensor 180E may detect a magnitude and a direction of gravity. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in an image shooting scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object through the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The touch sensor 180K is also referred to as a "touch component". The touch sensor 180K may be disposed on the display screen 194, and the touch sensor 180K and the display screen 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided on the display screen 194. In some other embodiments, the touch sensor 180K may alternatively be disposed on a surface of the electronic device 100 at a location different from that of the display screen 194.

The electronic device may be a portable terminal device carrying HarmonyOS, iOS, Android, Microsoft, or another operating system, for example, a mobile phone, a tablet computer, or a wearable device; or may be a non-portable terminal device, for example, a laptop (Laptop) computer having a touch-sensitive surface or a touch panel, or a desktop computer having a touch-sensitive surface or a touch panel. A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

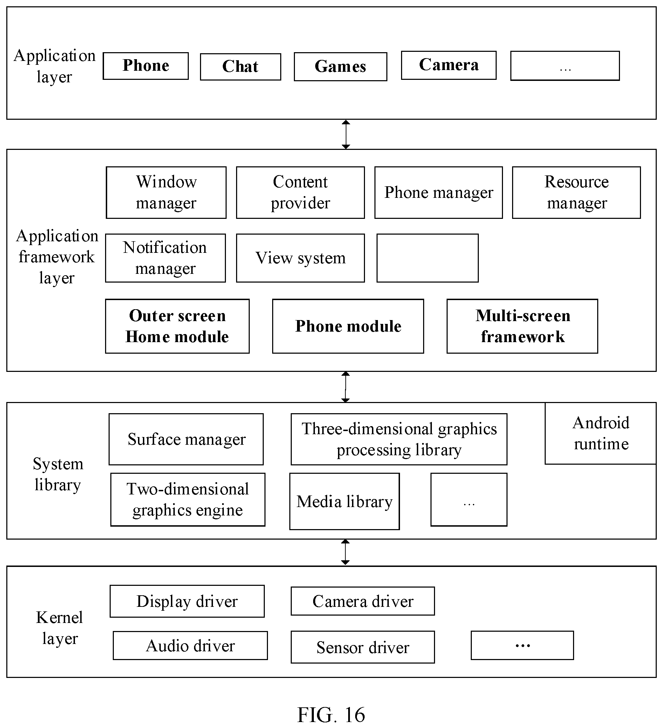

**FIG. 16** **is a block diagram of a software structure of an electronic device 100 according to an embodiment of this application.**

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 16, the application package may include applications such as **a phone application, a chat application, a games application, and a camera application.**

The application framework layer provides an application programming interface (application programming interface, API) and a programming framework for an application at the application layer. The application framework layer includes some predefined functions.

As shown in FIG. 16, the application framework layer may include a window manager, a content provider, a view system, a phone manager, a resource manager, a notification manager, **an outer screen Home module, a phone module, a multi-screen framework,** and the like.

**The outer screen Home module may be configured to: after the electronic device 100 enters a specified service scenario, determine display modes of an inner screen and an outer screen, and determine content displayed on the outer screen in the specified service scenario.**

**The phone module may be configured to: monitor a call status of the electronic device 100, and transfer the call status to the outer screen Home module, so that the outer screen Home module determines whether the electronic device 100 enters the specified service scenario, for example, a voice call scenario.**

**The multi-screen framework may include a power module, a screen switching module, and a display module. The power module may be configured to: monitor a screen-on/off event of a display screen (for example, the inner screen), and notify the display screen to power on/off. The screen switching module may be configured to: manage screen switching logic of the inner screen and the outer screen, and control, based on the display modes of the inner screen and the outer screen, the outer screen to turn on and off. The display module may be configured to manage displaying of the display screen.**

The window manager is configured to manage a window program. The window manager may obtain a size of the display screen, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying a picture. The view system may be used to construct an application. A display interface may include one or more views. For example, a display interface including an SMS message notification icon may include a text display view and an image display view.

The phone manager is configured to provide a communication function for the electronic device 100, for example, management of a call status (including answer, decline, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to: notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is prompted in the status bar, an alert tone is made, the electronic device vibrates, or an indicator blinks.

The Android runtime includes a core library and a virtual machine. The Android runtime is responsible for scheduling and management of the Android system.

The core library includes two parts: a functional function that needs to be called in Java language and a core library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playing and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of an operating procedure of software and hardware of the electronic device 100 with reference to an image shooting scenario.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. An example in which the touch operation is a single-tap operation, and a control corresponding to the single-tap operation is a control of a camera application icon is used. A camera application invokes an interface of the application framework layer to start the camera application, then enables the camera driver by invoking the kernel layer, and captures a static image or a video by using the camera 193.

It may be understood that the software framework of the electronic device 100 shown in FIG. 16 is merely an example for description. In another embodiment of this application, the electronic device 100 may further include more or fewer software modules. This is not limited in embodiments of this application.

It should be understood that the steps in the foregoing method embodiments may be performed by a hardware integrated logic circuit in the processor or by using instructions in a form of software. The steps of the methods disclosed with reference to embodiments of this application may be directly performed and accomplished by using a hardware processor, or may be performed and accomplished by using a combination of hardware and software modules of the processor.

This application further provides an electronic device. The electronic device may include an outer screen, an inner screen, a memory, and a processor. The memory may be configured to store a computer program. The processor may be configured to invoke the computer program in the memory, so that the electronic device performs the method performed by the electronic device 100 in any one of the foregoing embodiments.

This application further provides a chip system. The chip system includes at least one processor, configured to implement functions in the method performed by the electronic device 100 in any one of the foregoing embodiments.

In a possible design, the chip system further includes a memory, the memory is configured to store program instructions and data, and the memory is located inside or outside the processor.

The chip system may include a chip, or may include a chip and another discrete component.

Optionally, there may be one or more processors in the chip system. The processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in a memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a microcontroller unit (microcontroller unit, MCU), a programmable controller (programmable logic device, PLD), or another integrated chip.

This application further provides a computer program product. The computer program product includes a computer program (which may also be referred to as code or instructions). When the computer program is run, a computer is caused to perform the method performed by the electronic device 100 in any one of the foregoing embodiments.

This application further provides a computer-readable storage medium. The computer-readable storage medium stores a computer program (which may also be referred to as code or instructions). When the computer program is run, a computer is caused to perform the method performed by the electronic device 100 in any one of the foregoing embodiments.

It should be noted that the processor in embodiments of this application may be an integrated circuit chip, and has a signal processing capability. In an implementation process, the steps in the foregoing method embodiments may be performed by a hardware integrated logic circuit in the processor or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. It may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed and accomplished by using a hardware decoding processor, or may be performed and accomplished by using a combination of hardware and software modules of the decoding processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

In addition, an embodiment of this application further provides an apparatus. The apparatus may be specifically a component or a module, and the apparatus may include one or more processors and memories that are connected to each other. The memory is configured to store a computer program. When the computer program is executed by one or more processors, the apparatus is caused to perform the method in the foregoing method embodiments.

The apparatus, the computer-readable storage medium, the computer program product, or the chip provided in embodiments of this application is configured to perform the corresponding method provided above. Therefore, for beneficial effects that can be achieved, refer to beneficial effects in the corresponding method provided above, and details are not described herein again.

The implementations of this application may be randomly combined to achieve different technical effects.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (solid state drive, SSD)), or the like.

A person of ordinary skill in the art may understand that all or a part of the procedures of the methods in embodiments may be implemented by a computer program instructing related hardware. The program may be stored in a computer-readable storage medium. When the program is run, the procedures of the methods in embodiments are executed. The foregoing storage medium includes any medium that can store program code, such as a ROM, a random access memory RAM, a magnetic disk, or an optical disc.

In conclusion, the foregoing descriptions are merely embodiments of the technical solutions of this application, but are not intended to limit the protection scope of this application. Any modification, equivalent replacement, improvement, or the like made based on this application shall fall within the protection scope of this application.

## Claims

1. A display method, wherein the method is applied to an electronic device comprising an outer screen and an inner screen, and the method comprises:
starting, by the electronic device, a first application or enabling a first function of a second application;
displaying, by the electronic device, first content on the outer screen in response to the first application being started or the first function being enabled;
detecting, by the electronic device, a first event during running of the first application or the first function; and
switching, by the electronic device, the first content to second content.

2. The method according to claim 1, wherein
the first application is a phone application or a chat application, or the first function is a voice call function or a video call function, and the first event is a voice keyword uttered by a user who uses the electronic device and/or a call contact during a call;
the first application is a games application, or the first function is a game function, and the first event comprises one or more of the following: a game progress, a game status, and a player status; or
the first application is a camera application, or the first function is an image shooting function, and the first event comprises one or more of the following: an image shooting operation, a video recording operation, and an operation of adjusting an image shooting parameter.

3. The method according to claim 1 or 2, wherein the first event is an adjustment operation performed on a display interface of the first application or the first function, and the second content indicates an adjustment status that is of the display interface of the first application or the first function and that is obtained through the adjustment operation.

4. The method according to any one of claims 1 to 3, wherein the method further comprises:
starting, by the electronic device, a third application or enabling a second function of a fourth application; and
displaying, by the electronic device, third content on the outer screen in response to the first application being started or the first function being enabled.

5. The method according to any one of claims 1 to 4, wherein after switching, by the electronic device, the first content to the second content, the method further comprises:
detecting, by the electronic device, a second event during running of the first application or the first function, wherein the second event and the first event are different; and
switching, by the electronic device, the second content to fourth content, wherein the fourth content and the second content are different.

6. The method according to any one of claims 1 to 5, wherein the first content is content preset in the electronic device, the first content is determined based on the first application or the first function, or the first content is content determined based on a user operation.

7. The method according to any one of claims 1 to 6, wherein after starting, by the electronic device, the first application or enabling the first function of the second application, and before displaying, by the electronic device, the first content on the outer screen, the inner screen is in a screen-off state.

8. The method according to any one of claims 1 to 7, wherein the method further comprises:
detecting, by the electronic device, that the inner screen is in a screen-on state; and
controlling, by the electronic device, the outer screen to turn off.

9. The method according to claim 7 or 8, wherein the first function is the voice call function, and the electronic device is in a voice call state when the first content or the second content is displayed on the outer screen.

10. The method according to any one of claims 1 to 6, wherein after starting, by the electronic device, the first application or enabling the first function of the second application, and before displaying, by the electronic device, the first content on the outer screen, the inner screen is in a screen-on state.

11. The method according to any one of claims 1 to 6 and claim 10, wherein the method further comprises:
detecting, by the electronic device, that the inner screen is in a screen-off state; and
controlling, by the electronic device, the outer screen to turn off.

12. The method according to claim 10 or 11, wherein the first function is a function other than the voice call function.

13. The method according to any one of claims 1 to 12, wherein the first content or the second content comprises any one or more of the following: a picture, a text, or an animation effect.

14. The method according to any one of claims 1 to 13, wherein the second content comprises an animation effect; and after switching, by the electronic device, the first content to the second content, the method further comprises:
when detecting a first preset condition, reducing, by the electronic device, display brightness of the second content, and/or increasing a playing interval of the animation effect comprised in the second content, wherein the first preset condition comprises one or more of the following: duration in which the first application or the first function is run reaches first duration, a battery level of the electronic device is less than a first threshold, and the electronic device enables a power saving mode.

15. The method according to any one of claims 1 to 14, wherein a size of the outer screen is less than a size of the inner screen.

16. The method according to any one of claims 1 to 15, wherein the inner screen comprises a first display screen and a second display screen;
when the electronic device is in a folded state, the first display screen and the second display screen are in face-to-face contact; and
when the electronic device is in an unfolded state, the outer screen is located on the back of the inner screen.

17. An electronic device, comprising an outer screen, an inner screen, a memory, one or more processors, and one or more programs, wherein when the one or more processors execute the one or more programs, the electronic device is caused to implement the method according to any one of claims 1 to 16.

18. A computer-readable storage medium, comprising instructions, wherein when the instructions are run on an electronic device, the electronic device is caused to perform the method according to any one of claims 1 to 16.

19. A computer program product, wherein when the computer program product runs on a computer, the computer is caused to perform the method according to any one of claims 1 to 16.
